(19) Europäisches Patentamt
European Patent Office
Office européen des brevets

(11) EP 2 065 890 B1

(12) **EUROPEAN PATENT SPECIFICATION**

(45) Date of publication and mention of the grant of the patent:
**25.01.2012 Bulletin 2012/04**

(51) Int Cl.:
***G11B 7/24*** *(2006.01)*

(21) Application number: **08020472.0**

(22) Date of filing: **25.11.2008**

(54) **Optical recording composition and holographic recording medium**

Zusammensetzung zur optischen Aufzeichnung und holografisches Aufzeichnungsmedium

Composition d'enregistrement optique et support d'enregistrement holographique

(84) Designated Contracting States:
**DE FR GB**

(30) Priority: **30.11.2007 JP 2007310366**
**14.05.2008 JP 2008126585**

(43) Date of publication of application:
**03.06.2009 Bulletin 2009/23**

(73) Proprietor: **FUJIFILM Corporation**
**Minato-ku**
**Tokyo**
**106-0031 (JP)**

(72) Inventor: **Yamada, Satoru**
**Ashigarakami-gun**
**Kanagawa 258-8577 (JP)**

(74) Representative: **HOFFMANN EITLE**
**Patent- und Rechtsanwälte**
**Arabellastraße 4**
**81925 München (DE)**

(56) References cited:
**WO-A1-94/14792**
**WO-A1-96/19471**
**WO-A1-03/023519**

EP 2 065 890 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

FIELD OF THE INVENTION

The present invention relates to an optical recording composition comprising a cyclic allyl sulfide compound. More particularly, the present invention relates to an optical recording composition suited to the manufacturing of a holographic recording medium, particularly a volume holographic recording medium having a relatively thick recording layer. The present invention further relates to a holographic recording medium having a recording layer comprising the cyclic allyl sulfide compound.

DISCUSSION OF THE BACKGROUND

Holographic optical recording media based on the principle of the holograph have been developed. Recording of information on holographic optical recording media is carried out by superposing an informing light containing image information and a reference light in a recording layer comprised of a photosensitive composition to write an interference fringe thus formed in the recording layer. During the reproduction of information, a reference light is directed at a prescribed angle into the recording layer in which the information has been recorded, causing optical diffraction of the reference light by the interference fringe which has been formed, reproducing the informing light.

In recent years, volume holography, and, more particularly, digital volume holography, have been developed to practical levels for ultrahigh-density optical recording and have been garnering attention. Volume holography is a method of writing interference fringes three-dimensionally by also actively utilizing the direction of thickness of an optical recording medium. It is advantageous in that increasing the thickness permits greater diffraction efficiency and multiplexed recording increases the recording capacity. Digital volume holography is a computer-oriented holographic recording method in which the image data being recorded are limited to a binary digital pattern while employing a recording medium and recording system similar to those of volume holography. In digital volume holography, for example, image information such as an analog drawing is first digitized and then expanded into two-dimensional digital pattern information, which is recorded as image information. During reproduction, the digital pattern information is read and decoded to restore the original image information, which is displayed. Thus, even when the signal-to-noise (S/N) ratio deteriorates somewhat during reproduction, by conducting differential detection or conducting error correction by encoding the two-dimensional data, it is possible to reproduce the original data in an extremely faithful manner (see Japanese Unexamined Patent Publication (KOKAI) Heisei No. 11-311936 or English language family member US 2002/0114027 A1).

For example, Published Japanese Translation of a PCT International Application (TOKUHYO) No. 2005-502918 or English language family member WO 03/023519, disclose the use of a urethane matrix and a phenyl acrylate derivative in a holographic optical recording medium of the photopolymer type. However, with common photopolymers, the polymerization of monomers is accompanied by volumetric shrinkage. Volumetric shrinkage causes a reduction in recording capacity. U.S. Patent No. 4,959,284 proposes the formation of a recording layer using radical ring-opening polymerization to enhance storage capacity. However, even this does not afford adequate storage capacity. The volumetric shrinkage is problematic in that it distorts the recording interference fringe, producing errors during data input and output and compromising recording and reproducing precision.
WO-A-94/14792 and WO-A-96/19471 disclose cyclic allyl sulfides and their use in the preparation of polymeric coatings, adhesives, dental restorative materials, matrix resins for composites and optical lenses with minimal volume shrinkage.

SUMMARY OF THE INVENTION

An aspect of the present invention provides for an optical recording composition suited to high-sensitivity digital volume holography with large storage capacity, and for a holographic recording medium permitting ultrahigh-density optical recording using the above optical recording composition.

As the result of extensive research, the present inventor discovered that the use of the cyclic allyl sulfide compound denoted by general formula (I) below could provide a holographic recording medium that underwent little volumetric shrinkage and permitted high-sensitivity recording. The present invention was devised on that basis.

An aspect of the present invention relates to an optical recording composition comprising a compound denoted by general formula (I).

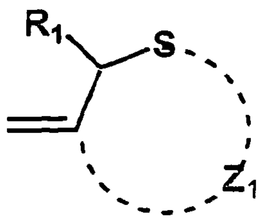

General Formula (I)

In general formula (I), $R_1$ denotes a hydrogen atom or an alkyl group, and $Z_1$ denotes an atom group, the atom group forming a ring structure with a sulfur atom and a carbon atom which are adjacent to the atom group, and a carbon atom bonded to the sulfur atom.

The optical recording composition may be a holographic recording composition.

The compound denoted by general formula (I) may be a compound denoted by general formula (II).

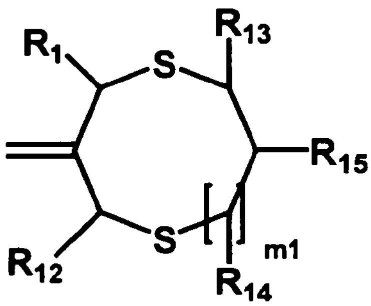

General Formula (II)

In general formula (II), $R_1$ is defined in the same manner as in general formula (I), $R_{12}$ denotes a hydrogen atom or an alkyl group, each of $R_{13}$, $R_{14}$ and $R_{15}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and ml denotes 0 or 1.

In general formula (II), each of $R_1$ and $R_{12}$ may independently denote a hydrogen atom or methyl group, and each of $R_{13}$, $R_{14}$ and $R_{15}$ may independently denote a hydrogen atom, alkyl group, aryl group, alkoxy group, aryloxy group, alkoxycarbonyl group, aryloxycarbonyl group, acyloxy group, acylamino group, amino group or acyl group.

In general formula (II), both of $R_1$ and $R_{12}$ may denote a hydrogen atom, each of $R_{13}$, $R_{14}$ and $R_{15}$ may independently denote a hydrogen atom, alkyl group, aryl group, alkoxy group, aryloxy group or acyloxy group, and ml may denote 1.

The compound denoted by general formula (I) may be a compound denoted by general formula (III).

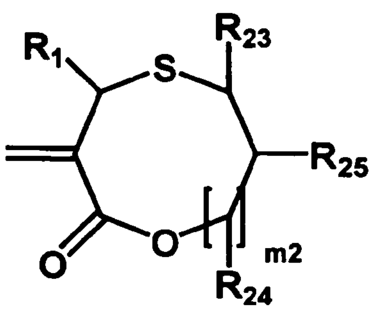

General Formula (III)

In general formula (III), $R_1$ is defined in the same manner as in general formula (I), each of $R_{23}$, $R_{24}$ and $R_{25}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and m2 denotes 0 or 1.

In general formula (III), $R_1$ may denote a hydrogen atom or methyl group, and each of $R_{23}$, $R_{24}$ and $R_{25}$ may independently denote a hydrogen atom, alkyl group, aryl group, alkoxy group, aryloxy group, alkoxycarbonyl group, aryloxycarbonyl group, acyloxy group, acylamino group, amino group or acyl group.

In general formula (III), $R_1$ may denote a hydrogen atom or methyl group, each of $R_{23}$, $R_{24}$ and $R_{25}$ may independently denote a hydrogen atom, alkyl group, aryl group, alkoxy group, aryloxy group, or acyloxy group, and m2 may denote 0.

The optical recording composition may further comprise a thermosetting compound.

The thermosetting compound may comprise a polyfunctional isocyanate and a polyfunctional alcohol.

The optical recording composition may further comprise a photo-induced radical polymerization initiator.

The photo-induced radical polymerization initiator may be a compound denoted by general formula (IV).

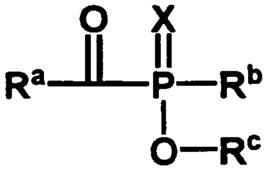

General Formula (IV)

In general formula (IV), each of $R^a$, $R^b$ and $R^c$ independently denotes an alkyl group, aryl group or heterocyclic group, and X denotes an oxygen atom or sulfur atom.

A further aspect of the present invention relates to a holographic recording medium comprising a recording layer, wherein the recording layer comprises the above compound denoted by general formula (I).

The recording layer may further comprise a thermosetting compound.

The thermosetting compound may comprise a polyfunctional isocyanate and a polyfunctional alcohol.

The recording layer may further comprise a photo-induced radical polymerization initiator.

The photo-induced radical polymerization initiator may be the above compound denoted by general formula (IV).

The recording layer may be formed with the above optical recording composition.

The present invention can provide a holographic recording medium that undergoes little volumetric shrinkage and permits high-sensitivity recording and reproduction. The holographic recording medium of the present invention permits ultrahigh-density recording and is particularly suited as a recording medium for digital volume holography permitting the use of inexpensive lasers and capable of reducing the time required for writing.

Other exemplary embodiments and advantages of the present invention may be ascertained by reviewing the present disclosure and the accompanying drawings.

BRIEF DESCRIPTION OF THE DRAWINGS

The present invention will be described in the following text by the exemplary, non-limiting embodiments shown in the figures, wherein:

Fig. 1 is a schematic cross-sectional view of an example of a holographic recording medium according to a first implementation embodiment.
Fig. 2 is a schematic cross-sectional view of an example of a holographic recording medium according to a second implementation embodiment.
Fig. 3 is a drawing descriptive of an example of an optical system permitting recording and reproducing of information on a holographic recording medium.
Fig. 4 is a block diagram showing an example of the overall configuration of a recording and reproducing device suited to use in recording and reproducing information on the holographic recording medium of the present invention.
Fig. 5 shows a conceptual diagram of an FPR model.

Explanations of symbols in the drawings are as follows:

| | |
|---|---|
| 1 | Lower substrate |
| 2 | Reflective film |
| 3 | Servo pit pattern |
| 4 | Recording layer |
| 5 | Upper substrate |
| 6 | Filter layer |
| 7 | Second gap layer |
| 8 | First gap layer |
| 12 | Objective lens |

13 Dichroic mirror
14 Detector
15 1/4 wavelength plate
16 Polarizing plate
17 Half mirror
20 Holographic recording medium
21 Holographic recording medium
22 Holographic recording medium
31 Pickup
81 Spindle
82 Spindle motor
83 Spindle servo circuit
84 Driving device
85 Detection circuit
86 Focus servo circuit
87 Tracking servo circuit
88 Slide servo circuit
89 Signal processing circuit
90 Controller
91 Operation element
100 Optical recording and reproducing device
A Entry and exit surface
FE Focus error signal
TE Tracking error signal
RF Reproduction signal

DETAILED DESCRIPTIONS OF THE EMBODIMENTS

The following preferred specific embodiments are, therefore, to be construed as merely illustrative, and non-limiting to the remainder of the disclosure in any way whatsoever. In this regard, no attempt is made to show structural details of the present invention in more detail than is necessary for fundamental understanding of the present invention; the description taken with the drawings making apparent to those skilled in the art how several forms of the present invention may be embodied in practice.

OPTICAL RECORDING COMPOSITION

The optical recording composition of the present invention comprises a cyclic allyl sulfide compound denoted by general formula (I) below. The cyclic allyl sulfide compound denoted by general formula (I) can be employed as a recording material in various recording systems in which information is recorded by irradiation with light. Among these, it is desirably employed as an optical recording compound such as a holographic recording compound, and is particularly suitable as a volume holographic recording compound. As set forth above, holographic recording is a method of recording information by superposing an informing light containing information and a reference light in a recording layer to write an interference fringe thus formed in the recording layer. Volume holographic recording is a method of recording information in holographic recording in which a three-dimensional interference image is written in the recording layer. In the present invention, the phrase "holographic recording compound" refers to a compound that permits the recording of an interference fringe as refractive index modulation, either directly or indirectly, by irradiating light to record information. The compound denoted by general formula (I) can undergo a polymerization reaction, either directly or through the action of a photopolymerization initiator, when irradiated with light, thereby permitting the recording of interference fringes as refractive index modulation.
The compound denoted by general formula (I) will be described in greater detail below.

Cyclic allyl sulfide compound denoted by general formula (I)

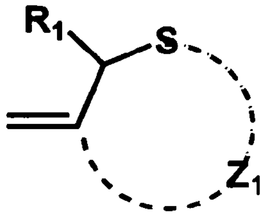

General Formula (I)

In general formula (I), $Z_1$ denotes an atom group, the atom group forming a ring structure with a sulfur atom and a carbon atom which are adjacent to the atom group, and a carbon atom bonded to the sulfur atom. Methylene carbons are examples of a component element of the ring structure formed by $Z_1$. Examples in addition to methylene carbon are carbonyl groups, thiocarbonyl groups, oxygen atoms, sulfur atoms, and other divalent organic linking groups. The above ring structure may be comprised of a combination of such component elements. The number of members in the ring is desirably 6 to 9, preferably 6 to 8, and more preferably, 7 to 8. The number of methylene carbons in the ring structure is desirably 3 to 7, preferably 4 to 6, and more preferably, 4 to 5.

In general formula (I), $R_1$ denotes a hydrogen atom or alkyl group. The alkyl group denoted by $R_1$ can be linear or branched, and can be substituted or unsubstituted. The number of carbon atoms it comprises is desirably 1 to 20, preferably 1 to 10, and more preferably, 1 to 3. In the present invention, the term "number of carbon atoms" of a group means the number of carbon atoms excluding substituents for a group having substituents.

Examples of the alkyl group denoted by $R_1$ are: methyl, ethyl, normal propyl, isopropyl, normal butyl, isobutyl, tertiary butyl, pentyl, cyclopentyl, hexyl, cyclohexyl, heptyl, octyl, tertiary octyl, 2-ethylhexyl, decyl, dodecyl, octadecyl, 2,3-dibromopropyl, adamantyl, benzyl, and 4-bromobenzyl groups. These groups may be further substituted.

When the group denoted by $R^1$ in general formula (I) comprises one or more substituents, examples of the substituents are halogen atoms and alkyl, alkenyl, alkoxy, aryloxy, alkylthio, alkoxycarbonyl, aryloxycarbonyl, amino, acyl, alkylaminocarbonyl, arylaminocarbonyl, sulfonamide, cyano, carboxy, hydroxy, and sulfonic acid groups. Of these, halogen atoms and alkoxy and alkylthio groups are preferred. When a cyclic allyl sulfide compound of general formula (I) is substituted as a substituent, a polyfunctional compound is denoted.

In general formula (I), it is desirable for $R_1$to denote a hydrogen atom or an alkyl group; for the number of members in the ring structure formed by $Z_1$with adjacent carbon atom and sulfur atom, and a carbon atom bonded to the sulfur atom to be 6 to 9; and for the atom group denoted by $Z_1$ to comprise a carbonyl group, oxygen atom, or sulfur atom, or some combination thereof, in addition to methylene carbon. It is preferable for $R_1$ to denote a hydrogen atom or an alkyl group; for the number of members in the ring structure formed by $Z_1$ with adjacent carbon atom and sulfur atom, and a carbon atom bonded to the sulfur atom to be 6 to 8; and for the atom group denoted by $Z_1$ to comprise a combination of a carbonyl group and an oxygen atom, or a sulfur atom, in addition to methylene carbon. It is even more preferable for $R_1$ to denote a hydrogen atom or an alkyl group; for the number of members in the ring structure formed by $Z_1$ with adjacent carbon atom and sulfur atom, and a carbon atom bonded to the sulfur atoms to be 7 or 8; and for the atom group denoted by $Z_1$ to comprise a sulfur atom in addition to methylene carbon. The compound denoted by general formula (I) is desirably a compound denoted by general formula (II) or (III), and preferably a compound denoted by general formula (II) from the perspective of recording characteristics.

Compounds denoted by general formulas (II) and (III) will be described below.

Cyclic allyl sulfide compound denoted by general formula (II)

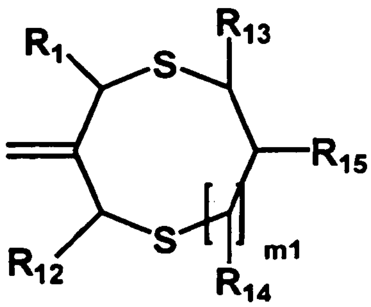

General Formula (II)

In general formula (II), $R_1$ is defined in the same manner as in general formula (I), $R_{12}$ denotes a hydrogen atom or alkyl group, each of $R_{13}$, $R_{14}$ and $R_{15}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and ml denotes 0 or 1.

In general formula (II), the details of the alkyl groups denoted by $R_1$, $R_{12}$, $R_{13}$, $R_{14}$, and $R_{15}$ are identical to those set forth in the description of the alkyl group in general formula (I) above.

In general formula (II), the aryl groups denoted by $R_{13}$, $R_{14}$, and $R_{15}$ can be substituted or unsubstituted. They desirably comprise 6 to 30 carbon atoms, preferably 6 to 20 carbon atoms. Specific examples of the aryl group are phenyl groups, naphthyl groups, and anthranyl groups. These may be further substituted.

In general formula (II), the heterocyclic groups denoted by $R_{13}$, $R_{14}$, and $R_{15}$ desirably comprise 4 to 14 carbon atoms, preferably 4 to 10 carbon atoms, and more preferably, 5 carbon atoms. Specific examples of the heterocyclic groups denoted by $R_{13}$, $R_{14}$, and $R_{15}$ are pyridine rings, piperazine rings, thiophene rings, pyrrole rings, imidazole rings, oxazole rings, and thiazole rings. These may be further substituted. Of the above hetero rings, pyridine rings are preferred.

In general formula (II), the alkoxy groups denoted by $R_{13}$, $R_{14}$, and $R_{15}$ can be linear or branched, and substituted or unsubstituted. They desirably comprise 1 to 30 carbon atoms, preferably 1 to 20 carbon atoms. Examples of such alkoxy groups are: methoxy groups, ethoxy groups, normal propyloxy groups, isopropyloxy groups, normal butyloxy groups, isobutyloxy groups, tertiary butyloxy groups, pentyloxy groups, cyclopentyloxy groups, hexyloxy groups, cyclohexyloxy groups, heptyloxy groups, octyloxy groups, tertiary octyloxy groups, 2-ethylhexyloxy groups, decyloxy groups, dodecyloxy groups, octadecyloxy groups, 2,3-dibromopropyloxy groups, adamantyloxy groups, benzyloxy groups, and 4-bromobenzyloxy groups.

In general formula (II), the aryloxy groups denoted by $R_{13}$, $R_{14}$, and $R_{15}$ can be substituted or unsubstituted. They desirably comprise 6 to 30 carbon atoms, preferably 6 to 20 carbon atoms. Specific examples are phenyloxy groups, naphthyloxy groups, and anthranyloxy groups.

In general formula (II), the alkylthio groups denoted by $R_{13}$, $R_{14}$, and $R_{15}$ can be linear or branched, and substituted or unsubstituted. They desirably comprise 1 to 30 carbon atoms, preferably 1 to 20 carbon atoms. Examples of such alkylthio groups are: methylthio groups, ethylthio groups, normal propylthio groups, isopropylthio groups, normal butylthio groups, isobutylthio groups, tertiary butylthio groups, pentylthio groups, cyclopentylthio groups, hexylthio groups, cyclohexylthio groups, heptylthio groups, octylthio groups, tertiary octylthio groups, 2-ethylhexylthio groups, decylthio groups, dodecylthio groups, octadecylthio groups, 2,3-dibromopropylthio groups, adamantylthio groups, benzylthio groups, and 4-bromobenzylthio groups.

In general formula (II), the arylthio groups denoted by $R_{13}$, $R_{14}$, and $R_{15}$ can be substituted or unsubstituted. They desirably comprise 6 to 30 carbon atoms, preferably 6 to 20 carbon atoms. Specific examples are: phenylthio groups, naphthylthio groups, and anthranylthio groups.

In general formula (II), the alkoxycarbonyl groups denoted by $R_{13}$, $R_{14}$, and $R_{15}$ can be substituted or unsubstituted. They desirably comprise 1 to 30 carbon atoms, preferably 1 to 20 carbon atoms. Examples of such alkoxycarbonyl groups are: methyloxycarbonyl groups, ethyloxycarbonyl groups, normal propyloxycarbonyl groups, isopropyloxycarbonyl groups, normal butyloxycarbonyl groups, isobutyloxycarbonyl groups, tertiary butyloxycarbonyl groups, pentyloxycarbonyl groups, cyclopentyloxycarbonyl groups, hexyloxycarbonyl groups, cyclohexyloxycarbonyl groups, heptyloxycarbonyl groups, octyloxycarbonyl groups, tertiary octyloxycarbonyl groups, 2-ethylhexyloxycarbonyl groups, decyloxycarbonyl groups, and dodecyloxycarbonyl groups.

In general formula (II), the aryloxycarbonyl groups denoted by $R_{13}$, $R_{14}$, and $R_{15}$ can be substituted or unsubstituted. They desirably comprise 7 to 30 carbon atoms, preferably 7 to 20 carbon atoms. Specific examples are: phenyloxycarbonyl groups, naphthyloxycarbonyl groups, and anthranyloxycarbonyl groups.

In general formula (II), the acyloxy groups denoted by $R_{13}$, $R_{14}$, and $R_{15}$ can be substituted or unsubstituted. They desirably comprise 1 to 30 carbon atoms, preferably 1 to 20 carbon atoms. Examples of such acyloxy groups are: methylcarbonyloxy groups, ethylcarbonyloxy groups, normal propylcarbonyloxy groups, isopropylcarbonyloxy groups, normal butylcarbonyloxy groups, isobutylcarbonyloxy groups, tertiary butylcarbonyloxy groups, pentylcarbonyloxy groups, cyclopentylcarbonyloxy groups, hexylcarbonyloxy groups, cyclohexylcarbonyloxy groups, heptylcarbonyloxy groups, octylcarbonyloxy groups, tertiary octylcarbonyloxy groups, 2-ethylhexylcarbonyloxy groups, decylcarbonyloxy groups, dodecylcarbonyloxy groups, and benzoyloxy groups.

In general formula (II), the acylamino groups denoted by $R_{13}$, $R_{14}$, and $R_{15}$ can be substituted or unsubstituted. They desirably comprise 1 to 30 carbon atoms, preferably 1 to 20 carbon atoms. Examples of such acylamino groups are: methylcarbonylamino groups, ethylcarbonylamino groups, and phenylcarbonylamino groups.

In general formula (II), the sulfonylamino groups denoted by $R_{13}$, $R_{14}$, and R15 can be substituted or unsubstituted. They desirably comprise 1 to 30 carbon atoms, preferably 1 to 20 carbon atoms. Examples of such sulfonylamino groups are: methylsulfonylamino groups, ethylsulfonylamino groups, and phenylsulfonylamino groups.

In general formula (II), the amino groups denoted by $R_{13}$, $R_{14}$, and $R_{15}$ can be monosubstituted amino groups or disubstituted amino groups, with disubstituted amino groups being desirable. They can be substituted or unsubstituted.

They desirably comprise 1 to 30 carbon atoms, preferably 1 to 20 carbon atoms. Examples of such amino groups are dimethylamino groups and diphenylamino groups.

In general formula (II), the acyl groups denoted by $R_{13}$, $R_{14}$, and $R_{15}$ can be substituted or unsubstituted. They desirably comprise 1 to 30 carbon atoms, preferably 1 to 20 carbon atoms. Examples of such acyl groups are acetyl groups and benzoyl groups.

In general formula (II), examples of halogen groups denoted by $R_{13}$, $R_{14}$, and $R_{15}$ are chloro groups, bromo groups, and iodo groups, with bromo groups being desirable.

In general formula (II), when the groups denoted by $R_1$, $R_{12}$, $R_{13}$, $R_{14}$, and $R_{15}$ comprise one or more substituents, examples of the substituents are: halogen atoms, alkyl groups, alkenyl groups, alkoxy groups, aryloxy groups, alkylthio groups, alkoxycarbonyl groups, aryloxycarbonyl groups, amino groups, acyl groups, alkylaminocarbonyl groups, arylaminocarbonyl groups, sulfonamide groups, cyano groups, carboxy groups, hydroxyl groups, and sulfonic acid groups. Of these, halogen atoms, alkoxy groups, and alkylthio groups are preferred. When a cyclic allyl sulfide compound of general formula (II) is substituted as a substituent, a polyfunctional compound is denoted.

In general formula (II), ml denotes the integer 0 or 1; ml is desirably 1.

Examples of desirable compounds denoted by general formula (II) are compounds in which each of $R_1$ and $R_{12}$ independently denotes a hydrogen atom or a methyl group, and each of $R_{13}$, $R_{14}$ and $R_{15}$ independently denotes a hydrogen atom, alkyl group, aryl group, alkoxy group, aryloxy group, alkoxycarbonyl group, aryloxycarbonyl group, acyloxy group, acylamino group, amino group, or acyl group. Examples of preferred compounds denoted by general formula (II) are compounds in which each of $R_1$ and $R_{12}$ independently denotes a hydrogen atom or a methyl group; each of $R_{13}$ and $R_{14}$ independently denotes a hydrogen atom, alkyl group, aryl group, alkoxy group, aryloxy group, alkoxycarbonyl group, aryloxycarbonyl group, acyloxy group, acylamino group, amino group, or acyl group; $R_{15}$ denotes a hydrogen atom, alkyl group, aryl group, or acyloxy group; and ml denotes 0 or 1. Examples of compounds denoted by general formula (II) of greater preference are compounds in which each of $R_1$ and $R_{12}$ independently denotes a hydrogen atom or a methyl group; each of $R_{13}$ and $R_{14}$ independently denotes a hydrogen atom or a methyl group; $R_{15}$ denotes an alkyl group or acyloxy group; and ml denotes 0 or 1. Examples of compounds denoted by general formula (II) of still greater preference are compounds in which $R_1$ and $R_{12}$ both denote hydrogen atoms; each of $R_{13}$, $R_{14}$, and $R_{15}$ independently denotes a hydrogen atom, alkyl group, aryl group, alkoxy group, aryloxy group, or acyloxy group; and ml denotes 1. And the compound of greatest preference is a compound in which $R_1$ and $R_{12}$ both denote hydrogen atoms; $R_{13}$ and $R_{14}$ both denote hydrogen atoms; $R_{15}$ denotes an acyloxy group; and ml denotes 1.

<u>Cyclic alkyl sulfide compound denoted by general formula (III)</u>

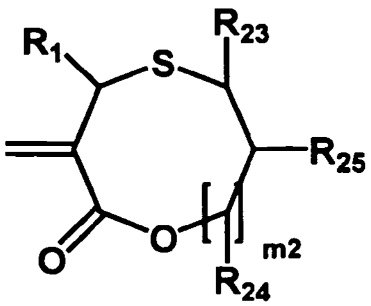

General Formula (III)

In general formula (III), $R_1$ is defined as in general formula (I), each of $R_{23}$, $R_{24}$ and $R_{25}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and m2 denotes 0 or 1.

In general formula (III), the details of the alkyl groups denoted by $R_1$, $R_{23}$, $R_{24}$, and $R_{25}$ are identical to those set forth for the alkyl groups in general formula (I).

In general formula (III), the aryl groups denoted by $R_{23}$, $R_{24}$, and $R_{25}$ can be substituted or unsubstituted. They desirably comprise 6 to 30 carbon atoms, preferably 6 to 20 carbon atoms. Specific examples of these aryl groups are phenyl groups, naphthyl groups, and anthranyl groups. These may be further substituted.

In general formula (III), the heterocyclic groups denoted by $R_{23}$, $R_{24}$, and $R_{25}$ desirably comprise 4 to 14 carbon atoms, preferably 4 to 10 carbon atoms, and more preferably, 5 carbon atoms. Specific examples of the heterocyclic groups denoted by $R_{23}$, $R_{24}$, and $R_{25}$ are: pyridine rings, piperazine rings, thiophene rings, pyrrole rings, imidazole rings,

oxazole rings, and thiazole rings. These may be further substituted. Of the above hetero rings, pyridine rings are particularly desirable.

In general formula (III), the alkoxy groups denoted by $R_{23}$, $R_{24}$, and $R_{25}$ can be linear or branched, and substituted or unsubstituted. They desirably comprise 1 to 30 carbon atoms, preferably 1 to 20 carbon atoms. Examples of such alkoxy groups are: methoxy groups, ethoxy groups, normal propyloxy groups, isopropyloxy groups, normal butyloxy groups, isobutyloxy groups, tertiary butyl oxy groups, pentyloxy groups, cyclopentyloxy groups, hexyloxy groups, cyclohexyloxy groups, heptyloxy groups, octyloxy groups, tertiary octyloxy groups, 2-ethylhexyloxy groups, decyloxy groups, dodecyloxy groups, octadecyloxy groups, 2,3-dibromopropyloxy groups, adamantyloxy groups, benzyloxy groups, and 4-bromobenzyloxy groups.

In general formula (III), the aryloxy groups denoted by $R_{23}$, $R_{24}$, and $R_{25}$ can be substituted or unsubstituted. They desirably comprise 6 to 30 carbon atoms, preferably 6 to 20 carbon atoms. Specific examples are phenyloxy groups, naphthyloxy groups, and anthranyloxy groups.

In general formula (III), the alkylthio groups denoted by $R_{23}$, $R_{24}$, and $R_{25}$ can be linear or branched, and substituted or unsubstituted. They desirably comprise 1 to 30 carbon atoms, preferably 1 to 20 carbon atoms. Examples of such alkylthio groups are: methylthio groups, ethylthio groups, normal propylthio groups, isopropylthio groups, normal butylthio groups, isobutylthio groups, tertiary butylthio groups, pentylthio groups, cyclopentylthio groups, hexylthio groups, cyclohexylthio groups, heptylthio groups, octylthio groups, tertiary octylthio groups, 2-ethylhexylthio groups, decylthio groups, dodecylthio groups, octadecylthio groups, 2,3-dibromopropylthio groups, adamantylthio groups, benzylthio groups, and 4-bromobenzylthio groups.

In general formula (III), the arylthio groups denoted by $R_{23}$, $R_{24}$, and $R_{25}$ can be substituted or unsubstituted. They desirably comprise 6 to 30 carbon atoms, preferably 6 to 20 carbon atoms. Specific examples are: phenylthio groups, naphthylthio groups, and anthranylthio groups.

In general formula (III), the alkoxycarbonyl groups denoted by $R_{23}$, $R_{24}$, and $R_{25}$ can be substituted or unsubstituted. They desirably comprise 1 to 30 carbon atoms, preferably 1 to 20 carbon atoms. Examples of such alkoxycarbonyl groups are: methyloxycarbonyl groups, ethyloxycarbonyl groups, normal propyloxycarbonyl groups, isopropyloxycarbonyl groups, normal butyloxycarbonyl groups, isobutyloxycarbonyl groups, tertiary butyloxycarbonyl groups, pentyloxycarbonyl groups, cyclopentyloxycarbonyl groups, hexyloxycarbonyl groups, cyclohexyloxycarbonyl groups, heptyloxycarbonyl groups, octyloxycarbonyl groups, tertiary octyloxycarbonyl groups, 2-ethylhexyloxycarbonyl groups, decyloxycarbonyl groups, and dodecyloxycarbonyl groups.

In general formula (III), the aryloxycarbonyl groups denoted by $R_{23}$, $R_{24}$, and $R_{25}$ can be substituted or unsubstituted. They desirably comprise 7 to 30 carbon atoms, preferably 7 to 20 carbon atoms. Specific examples are phenyloxycarbonyl groups, naphthyloxycarbonyl groups, and anthranyloxycarbonyl groups.

In general formula (III), the acyloxy groups denoted by $R_{23}$, $R_{24}$, and $R_{25}$ can be substituted or unsubstituted. They desirably comprise 1 to 30 carbon atoms, preferably 1 to 20 carbon atoms. Examples of such acyloxy groups are: methylcarbonyloxy groups, ethylcarbonyloxy groups, normal propylcarbonyloxy groups, isopropylcarbonyloxy groups, normal butylcarbonyloxy groups, isobutylcarbonyloxy groups, tertiary butylcarbonyloxy groups, pentylcarbonyloxy groups, cyclopentylcarbonyloxy groups, hexylcarbonyloxy groups, cyclohexylcarbonyloxy groups, heptylcarbonyloxy groups, octylcarbonyloxy groups, tertiary octylcarbonyloxy groups, 2-ethylhexylcarbonyloxy groups, decylcarbonyloxy groups, dodecylcarbonyloxy groups, and benzoyloxy groups.

In general formula (III), the acylamino groups denoted by $R_{23}$, $R_{24}$, and $R_{25}$ can be substituted or unsubstituted. They desirably comprise 1 to 30 carbon atoms, preferably 1 to 20 carbon atoms. Examples of such acylamino groups are methylcarbonylamino groups, ethylcarbonylamino groups, and phenylcarbonylamino groups.

In general formula (III), the sulfonylamino groups denoted by $R_{23}$, $R_{24}$, and $R_{25}$ can be substituted or unsubstituted. They desirably comprise 1 to 30 carbon atoms, preferably 1 to 20 carbon atoms. Examples of such sulfonylamino groups are methylsulfonylamino groups, ethylsulfonylamino groups, and phenylsulfonylamino groups.

In general formula (III), the amino groups denoted by $R_{23}$, $R_{24}$, and $R_{25}$ can be monosubstituted amino groups or disubstituted amino groups, with disubstituted amino groups being desirable. They can be substituted or unsubstituted. They desirably comprise 1 to 30 carbon atoms, preferably 1 to 20 carbon atoms. Examples of such amino groups are dimethylamino groups and diphenylamino groups.

In general formula (III), the acyl groups denoted by $R_{23}$, $R_{24}$, and $R_{25}$ can be substituted or unsubstituted. They desirably comprise 1 to 30 carbon atoms, preferably 1 to 20 carbon atoms. Examples of such acyl groups are acetyl groups and benzoyl groups.

In general formula (III), examples of the halogen groups denoted by $R_{23}$, $R_{24}$, and $R_{25}$ are chloro groups, bromo groups, and iodo groups, with bromo groups being desirable.

In general formula (III), when the groups denoted by $R_1$, $R_{23}$, $R_{24}$, and $R_{25}$ comprise one or more substituents, examples of the substituents are: halogen atoms, alkyl groups, alkenyl groups, alkoxy groups, aryloxy groups, alkylthio groups, alkoxycarbonyl groups, aryloxycarbonyl groups, amino groups, acyl groups, alkylaminocarbonyl groups, arylaminocarbonyl groups, sulfonamide groups, cyano groups, carboxy groups, hydroxyl groups, and sulfonic acid groups. Of

these, halogen atoms, alkoxy groups, and alkylthio groups are preferred. When a cyclic allyl sulfide compound of general formula (III) is substituted as a substituent, a polyfunctional compound is denoted.

In general formula (III), m2 denotes the integer 0 or 1; m2 desirably denotes 0.

Examples of desirable compounds denoted by general formula (III) are compounds in which $R_1$ denotes a hydrogen atom or a methyl group; each of $R_{23}$, $R_{24}$, and $R_{25}$ independently denotes a hydrogen atom, alkyl group, aryl group, alkoxy group, aryloxy group, alkoxycarbonyl group, aryloxycarbonyl group, acyloxy group, acylamino group, amino group, or acyl group. Examples of preferred compounds denoted by general formula (III) are compounds in which $R_1$ denotes a hydrogen atom or methyl group; each of $R_{23}$ and $R_{24}$ independently denotes a hydrogen atom, alkyl group, aryl group, alkoxy group, aryloxy group, alkoxycarbonyl group, aryloxycarbonyl group, acyloxy group, acylamino group, amino group, or acyl group; $R_{25}$ denotes a hydrogen atom, alkyl group, aryl group, or acyloxy group; and m2 denotes 0 or 1. Examples of compounds denoted by general formula (III) of greater preference are compounds in which $R_1$ denotes a hydrogen atom or methyl group; each of $R_{23}$ and $R_{24}$ independently denotes a hydrogen atom or methyl group; $R_{25}$ denotes an alkyl group or acyloxy group; and m2 denotes 0 or 1. Examples of compounds denoted by general formula (III) of still greater preference are compounds in which $R_1$ denotes a methyl group; each of $R_{23}$, $R_{24}$, and $R_{25}$ independently denotes a hydrogen atom, alkyl group, aryl group, alkoxy group, aryloxy group, or acyloxy group; and m2 denotes 0. And the compound of greatest preference is a compound in which $R_1$ denotes a methyl group; $R_{23}$ and $R_{24}$ denote hydrogen atoms; $R_{25}$ denotes an acyloxy group; and m2 denotes 0.

Specific examples of the compound denoted by general formula (I) are given below. However, the present invention is not limited to these specific examples.

M-1
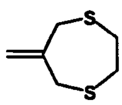
M-2
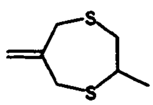
M-3
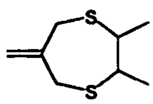
M-4
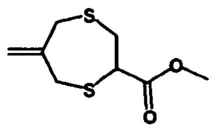

M-5
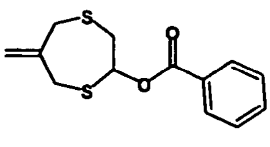
M-6
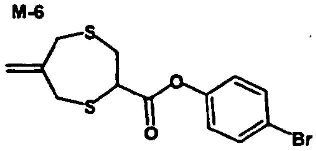
M-7
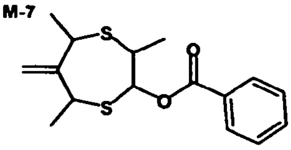

M-8
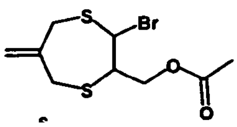
M-9
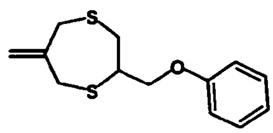
M-10
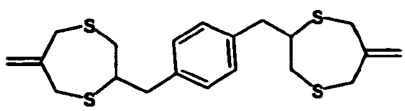

M-11
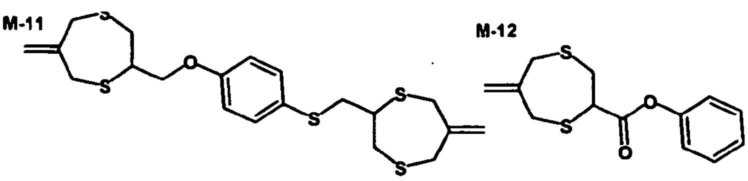
M-12
M-13
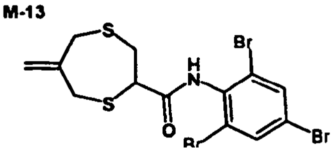

M-14
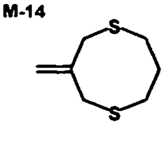
M-15
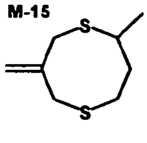
M-16
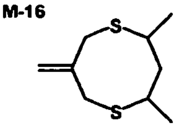
M-17
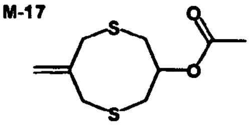

M-18

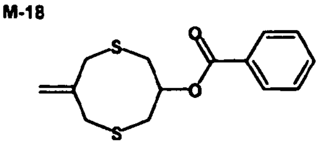

M-19

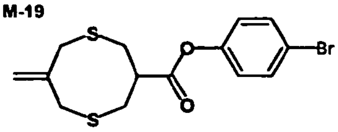

M-20

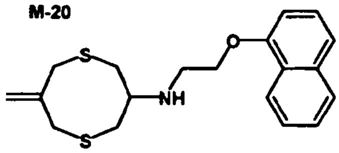

M-21

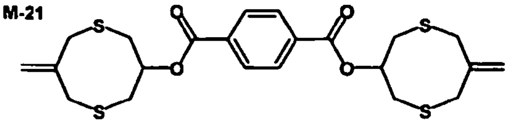

M-22

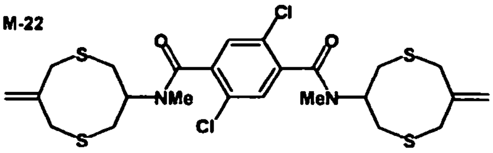

M-23

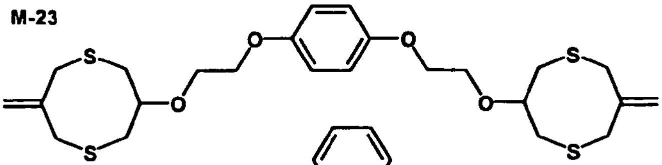

M-24

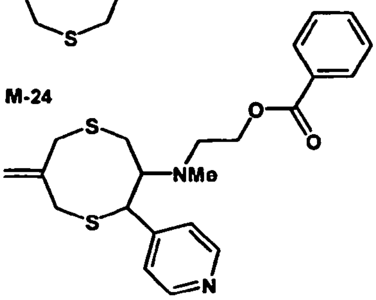

M-25

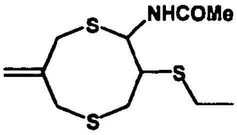

M-26

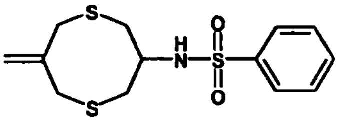

M-27
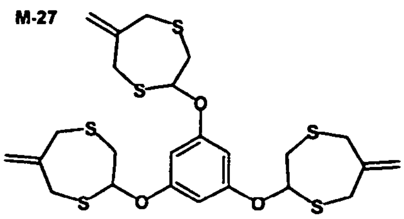

M-28
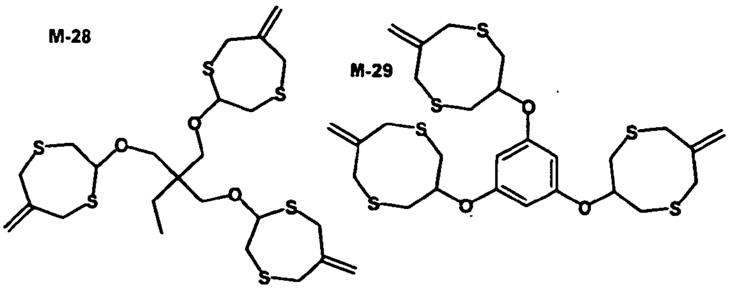
M-29

M-30
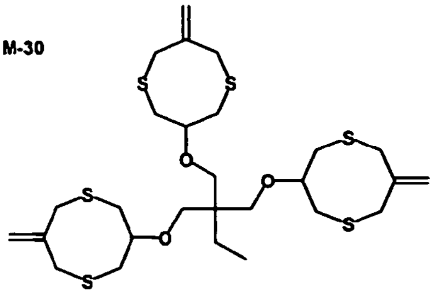

M-31
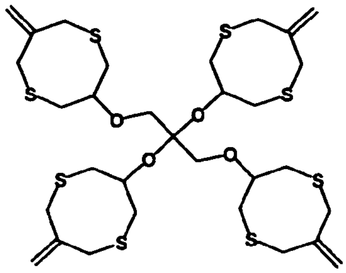

M-32
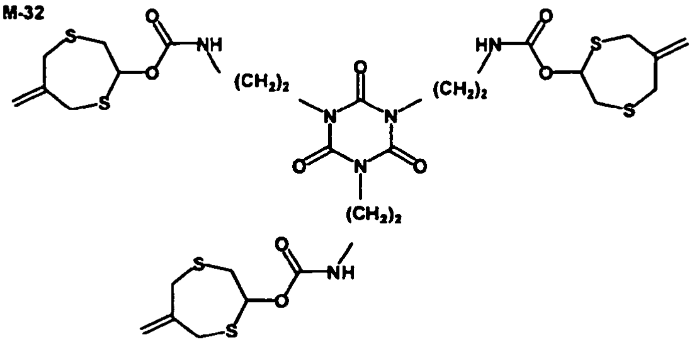

M-33
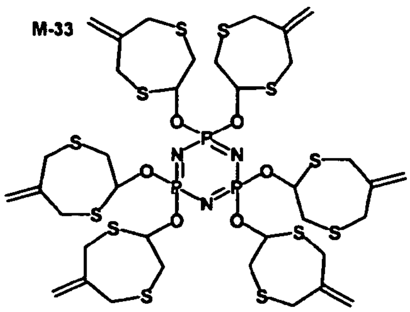

M-34
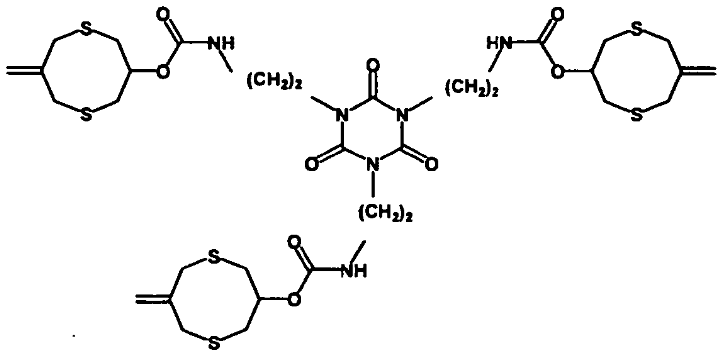

M-35
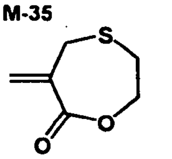

M-36
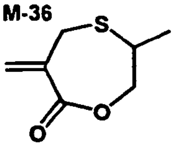

M-37
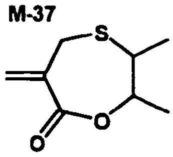

M-38
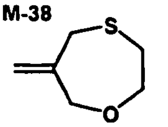

M-39
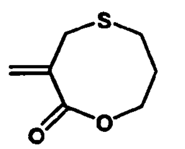

M-40

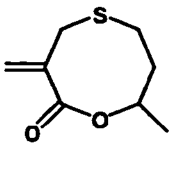

M-41

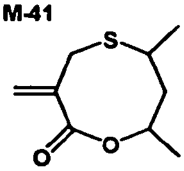

M-42

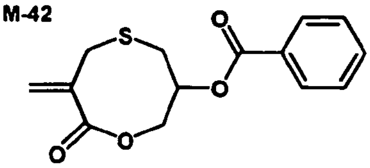

M-43

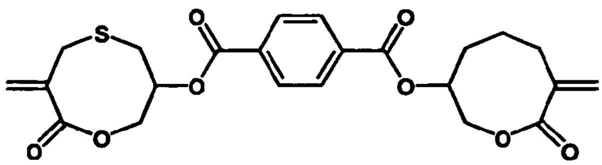

M-44

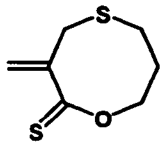

M-45

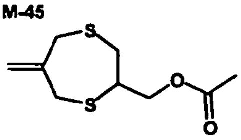

M-46

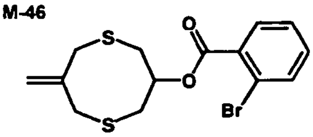

M-47

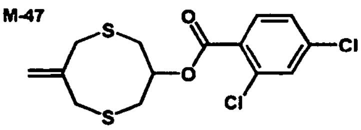

M-48

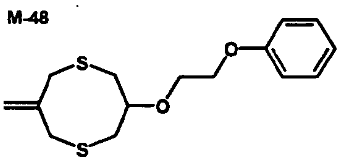

M-49

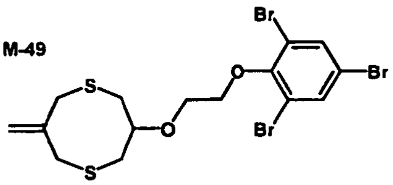

M-50

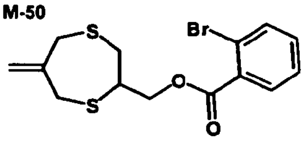

M-51

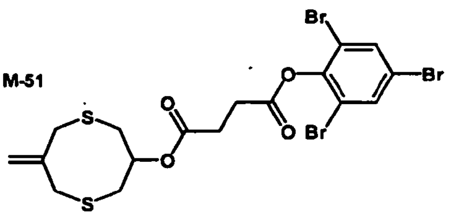

Examples of methods of synthesizing the above-described compounds denoted by general formulas (I), (II), and (III) are given in: Macromolecules, 1994, 27, 7935; Macromolecules, 1996, 29, 6983; Macromolecules, 2000, 33, 6722; and J. Polym. Sci.: Part A Polym. Chem. 2001, 39, 202. For details regarding these synthesis methods, reference can be made to Examples set forth further below.

The optical recording composition of the present invention comprises at least a cyclic allyl sulfide compound denoted by general formula (I). A single cyclic allyl sulfide compound denoted by general formula (I) may be employed, or two or more such compounds may be employed in combination. The content of the cyclic allyl sulfide compound denoted by general formula (I) in the optical recording composition of the present invention is not specifically limited, and can be suitably selected based on the objective. A content of 1 to 50 weight percent is desirable, 1 to 30 weight percent is preferable; and 3 to 10 weight percent is of greater preference. When the content is equal to or less than 50 weight percent, stability of the interference image can be readily ensured. A content of equal to or more than 1 weight percent can yield properties that are desirable from the perspective of diffraction efficiency.

The optical recording composition of the present invention can comprise a recording compound in the form of just the cyclic allyl sulfide compound denoted by general formula (I), or can comprise another polymerizable monomer along with the cyclic allyl sulfide compound. When a polymerizable monomer is employed in combination with the cyclic allyl sulfide compound denoted by general formula (I), the polymerizable monomer being combined desirably constitutes equal to or less than 50 weight percent of the total recording compound.

Examples of monomers that can be employed in combination with the cyclic allyl sulfide compound denoted

by general formula (I) are: acryloyl morpholine, phenoxyethyl acrylate, isobornyl acrylate, 2-hydroxypropyl acrylate, 2-ethylhexyl acrylate, 1,6-hexanediole diacrylate, tripropylene glycol acrylate, neopentyl glycol PO-modified diacrylate, 1,9-nonanediole diacrylate, hydroxypivalic acid neopentyl glycol diacrylate, EO-modified bisphenol A diacrylate, polyethylene glycol diacrylate, pentaerythritol triacrylate, pentaerythritol tetraacrylate, pentaerythritol hexaacrylate, EO-modified glycerol triacrylate, trimethylol propane triacrylate, EO-modified trimethylolpropane triacrylate, 2-naphtho-1-oxyethyl acrylate, 2-carbazoyl-9-ylethyl acrylate, (trimethylsilyloxy)dimethylsilylpropyl acrylate, vinyl-1-naphthoate, 2,4,6-tribromophenyl acrylate, pentabromoacrylate, phenylthioethyl acrylate, tetrahydrofurfuryl acrylate, bisphenoxyethanolfluorene diacrylate, styrene, p-chlorostyrene, N-vinylcarbazole, and N-vinylpropane. Of these, phenoxyethyl acrylate, 2,4,6-tribromophenyl acrylate, pentabromoacrylate, and bisphenoxyethanolfluorene diacrylate are desirable, and 2,4,6-tribromophenylacrylate and bisphenoxyethanolfluorene diacrylate are preferred.

<u>Photopolymerization initiator</u>

The optical recording composition of the present invention is desirably employed as a holographic recording composition, and is particularly suitable as a volume holographic recording composition. When employing the optical recording composition of the present invention as a holographic recording composition, the compound denoted by general formula (I) can function as a recording monomer. The optical recording composition of the present invention can comprise a photopolymerization initiator in addition to the cyclic allyl sulfide compound denoted by general formula (I). The photopolymerization initiator is not specifically limited other than that it be sensitive to the recording beam. However, a photo-induced radical polymerization initiator is desirable from the perspective of efficiency of the polymerization reaction.

Examples of photo-induced radical polymerization initiators are: 2,2'-bis(o-chlorophenyl)-4,4',5,5'-tetraphenyl-1,1'-biimidazole, 2,4,6-tris(trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiphenyl-iodonium tetrafluoroborate, 4-diethylaminophenylbenzenediazonium hexafluorophosphate, benzoin, 2-hydroxy-2-methyl-1-phenylpropane-2-one, benzophenone, thioxanthone, 2,4,6-trimethylbenzoyldiphenylacylphosphineoxide, triphenylbutylborate tetraethylammonium, and bis(η5-2,4-cyclopentanediene-1-yl)bis[2,6-difluoro-3-(1H-pyrrole-1-yl)phenyltitanium]. The photopolymerization initiators may be employed singly or in combinations of two or more in the optical recording composition of the present invention. A sensitizing dye, described further below, may also be employed in combination based on the wavelength of the light being irradiated.

The compounds denoted by general formula (IV) below are suitable as photo-induced radical polymerization initiators.

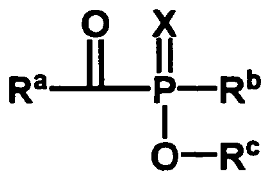

General Formula (IV)

In general formula (IV), each of $R^a$, $R^b$ and $R^c$ independently denotes an alkyl group, aryl group or heterocyclic group, and X denotes an oxygen atom or sulfur atom.

The compound denoted by general formula (IV) will be described in detail below.

In general formula (IV), each of $R^a$, $R^b$, and $R^c$ independently denotes an alkyl group, aryl group, or heterocyclic group.

The alkyl groups denoted by $R^a$, $R^b$, and $R^c$ can be linear or branched, and substituted or unsubstituted. They desirably have 1 to 30 carbon atoms, preferably 1 to 20 carbon atoms.

Examples of the alkyl groups denoted by $R^8$, $k^b$, and $R^c$ are: methyl groups, ethyl groups, normal propyl groups, isopropyl groups, normal butyl groups, isobutyl groups, tertiary butyl groups, pentyl groups, cyclopentyl groups, hexyl groups, cyclohexyl groups, heptyl groups, octyl groups, tertiary octyl groups, 2-ethylhexyl groups, decyl groups, dodecyl groups, octadecyl groups, 2,3-dibromopropyl groups, adamantyl groups, benzyl groups, and 4-bromobenzyl groups. These may be further substituted. Of these, tertiary butyl groups are greatly preferred from the perspective of stability in the presence of nucleophilic compounds, such as water and alcohol.

The aryl groups denoted by $R^a$, $R^b$, and $R^c$ in general formula (IV) can be substituted or unsubstituted. They desirably comprise 6 to 30 carbon atoms, preferably 6 to 20 carbon atoms. Specific examples of these aryl groups are: phenyl groups, naphthyl groups, and anthranyl groups. These may be further substituted. Of these, $R^a$ desirably denotes

an aryl group in which an alkyl group, aryl group, alkoxy group, or halogen group is present at position 2, and preferably denotes an aryl group in which an alkyl group, aryl group, alkoxy group, or halogen group is present at positions 2 and 6. For example, $R^a$ desirably denotes a 2-methylphenyl group, 2,4,6-trimethylphenyl group, 2,6-dichlorophenyl group, 2,6-dimethoxyphenyl group, or 2,6-trifluoromethylphenyl group, and preferably denotes a 2,4,6-trimethylphenyl group, 2,6-dichlorophenyl group, or 2,6-dimethoxyphenyl group. The presence of the above substituents at position 2, or at positions 2 and 6, is desirable to enhance stability in the presence of nucleophilic compounds, such as water and alcohols, as described in Jacobi, M., Henne, A. Polymers Paint Colour Journal 1985, 175, 636, for example. Details of desirable examples of alkyl groups and aryl groups employed as the above substituents are identical to those set forth for the alkyl groups denoted by $R^a$, $R^b$, and $R^c$ above.

The heterocyclic groups denoted by $R^a$, $R^b$, and $R^c$ in general formula (IV) are desirably four to eight-membered rings, preferably four to six-membered rings, and more preferably, five or six-membered rings. Specific examples are: pyridine rings, piperazine rings, thiophene rings, pyrrole rings, imidazole rings, oxazole rings, and thiazole rings. They may be further substituted. Of these hetero rings, pyridine rings are particularly desirable.

When the groups denoted by $R^a$, $R^b$, and $R^c$ in general formula (IV) comprise one or more substituents, examples of the substituents are: halogen groups, alkyl groups, alkenyl groups, alkoxy groups, aryloxy groups, alkylthio groups, alkoxycarbonyl groups, aryloxycarbonyl groups, amino groups, acyl groups, alkylaminocarbonyl groups, arylaminocarbonyl groups, sulfonamide groups, cyano groups, carboxy groups, hydroxyl groups, and sulfonic acid groups. Of these, halogen groups, alkoxy groups, and alkylthio groups are particularly desirable. When $R^a$ denotes an aryl group as set forth above, the above substituents are desirably present at position 2, or positions 2 and 6, on the aryl group.

In general formula (IV), X denotes an oxygen atom or a sulfur atom, desirably an oxygen atom.

Examples of desirable compounds denoted by general formula (IV) are compounds in which $R^a$ denotes an aryl group with an alkyl group, aryl group, alkoxy group, or halogen group present at position 2, $R^b$ denotes an aryl group, $R^c$ denotes an alkyl group, and X denotes an oxygen atom or a sulfur atom. Examples of preferred compounds are compounds in which $R^a$ denotes an aryl group with an alkyl group, aryl group, alkoxy group, or halogen group present at positions 2 and 6, $R^b$ denotes an aryl group, $R^c$ denotes an alkyl group, and X denotes an oxygen atom. Examples of compounds of greater preference are compounds in which $R^a$ denotes a 2,6-dimethoxybenzoyl group or 2,6-dichlorobenzoyl group, $R^b$ denotes a phenyl group, $R^c$ denotes an ethyl group or isopropyl group, and X denotes an oxygen atom.

Specific examples of the phosphorus compound denoted by general formula (IV) are given below. However, the present invention is not limited to these specific examples.

I-1
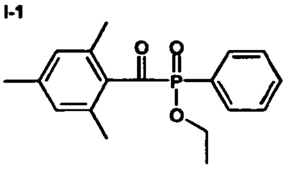
I-2
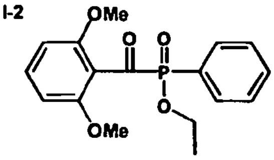
I-3
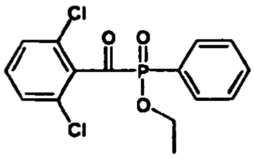
I-4
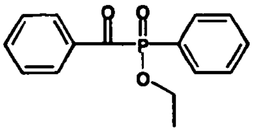
I-5
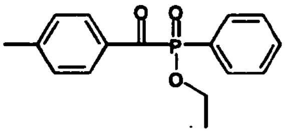
I-6
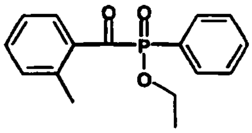
I-7
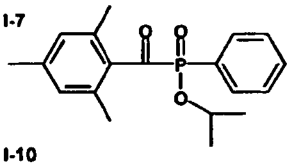
I-8
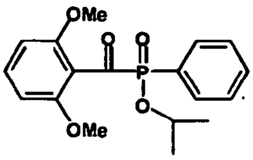
I-9
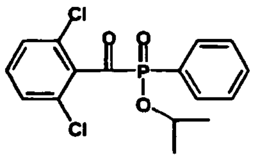
I-10
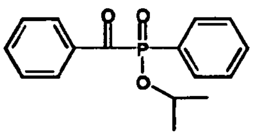
I-11
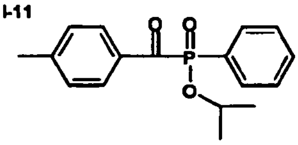
I-12
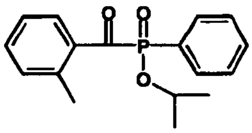
I-13
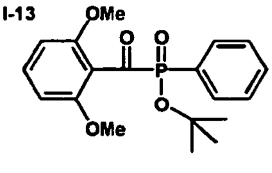
I-14
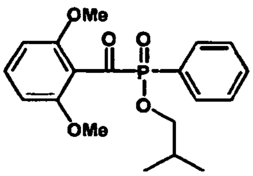
I-15
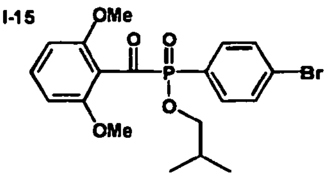
I-16
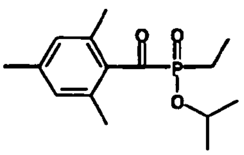
I-17
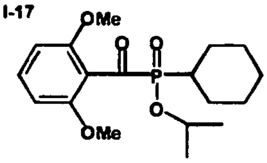
I-18
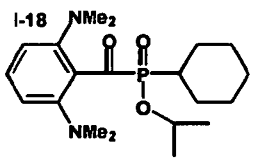

I-19
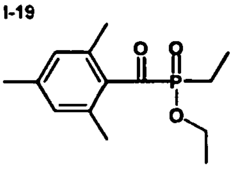
I-20
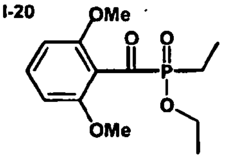
I-21
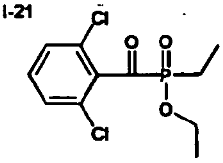

I-22
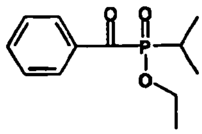
I-23
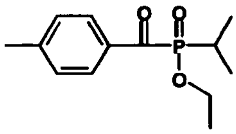
I-24
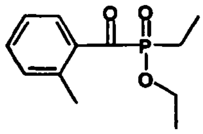

I-25
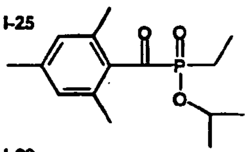
I-26
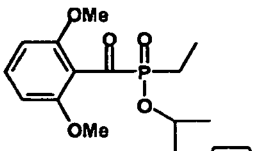
I-27
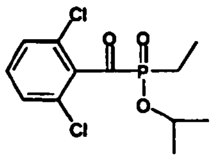

I-28
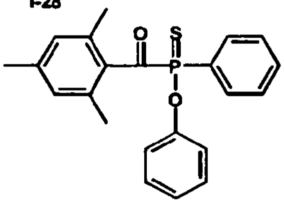
I-29
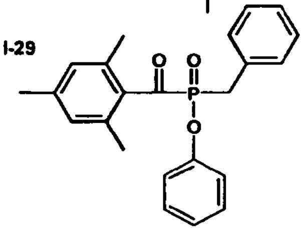
I-30
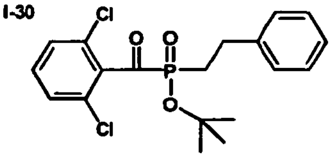

I-31
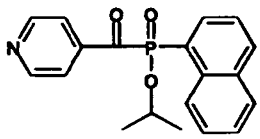
I-32
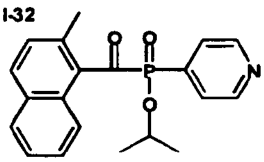
I-33
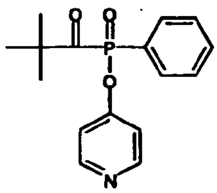

A method of synthesizing the above-described compound denoted by general formula (IV) is described in detail in, for example, DE2830927A1. Examples described further below can also be referred to for synthesis methods.

The content of the above photopolymerization initiator in the optical recording composition of the present invention is desirably 0.01 to 5 weight percent, preferably 1 to 3 weight percent. When the above content is equal to or greater than 0.01 weight percent, interference images of good sensitivity can be ensured. At equal to or lower than 5 weight percent, a recording layer that is adequately transparent to the recording beam and exhibits good recording sensitivity can be formed.

Matrix

The recording layer of an optical recording medium normally comprises a polymer to hold the photopolymerization initiator and monomers related to the recording and storage, known as a matrix. The matrix can be employed for achieving enhanced coating properties, coating strength, and hologram recording characteristics. The optical recording composition of the present invention can comprise curing compounds in the form of a matrix binder and/or matrix forming components (matrix precursors). A method of forming the matrix by, for example, coating a composition containing the matrix precursor on the surface of a substrate and then curing it is desirable because it permits the formation of the recording layer without the use of, or using only a small quantity of, solvent. Thermosetting compounds and light-curing compounds employing catalysts and the like that cure when irradiated with light may be employed as these curing compounds. Thermosetting compounds are desirable from the perspective of recording characteristics.

The thermosetting compound suitable for use in the optical recording composition of the present invention is not specifically limited. The matrix contained in the recording layer may be suitably selected based on the objective. Examples are urethane resins formed from isocyanate compounds and alcohol compounds; epoxy compounds formed from oxysilane compounds; melamine compounds; formalin compounds; ester compounds of unsaturated acids such as (meth)acrylic acid and itaconic acid; and polymers obtained by polymerizing amide compounds.

Of these, polyurethane matrices formed from isocyanate compounds and alcohol compounds are preferable. From the perspective of recording retention properties, three-dimensional polyurethane matrices formed from polyfunctional isocyanates and polyfunctional alcohols are particularly preferred.
The details of polyfunctional isocyanates and polyfunctional alcohols capable of forming polyurethane matrices are described below. bed below.

Examples of the polyfunctional isocyanates are: biscyclohexylmethane diisocyanate, hexamethylene diisocyanate, phenylene-1,3-diisocyanate, phenylene-1,4-diisocyanate, 1-methoxyphenylene-2,4-diisocyanate, 1-methylphenylene-2,4-diisocyanate, 2,4-tolylene diisocyanate, 2,6-tolylene diisocyanate, 1,3-xylylene diisocyanate, 1,4-xylylene diisocyanate, biphenylene-4,4'-diisocyanate, 3,3'-dimethoxybiphenylene-4,4'-diisocyanate, 3,3'-dimethylbiphenylene-4,4'-diisocyanate, diphenylmethane-2,4'-diisocyanate, diphenylmethane-4,4'-diisocyanate, 3,3'-dimethoxydiphenylmethane-4,4'-diisocyanate, 3,3'-dimethyldiphenylmethane-4,4'-diisocyanate, naphthylene-1,5-diisocyanate, cyclobutylene-1,3-diisocyanate, cyclopentylene-1,3-diisocyanate, cyclohexylene-1,3-diisocyanate, cyclohexylene-1,4-diisocyanate, 1-methylcyclohexylene-2,4-diisocyanate, 1-methylcyclohexylene-2,6-diisocyanate, 1-isocyanate-3,3,5-trimethyl-5-isocyanate methylcyclohexane, cyclohexane-1,3-bis(methylisocyanate), cyclohexane-1,4-bis(methylisocyanate), isophorone diisocyanate, dicyclohexylmethane-2,4'-diisocyanate, dicyclohexylmethane-4,4'-diisocyanate, ethylene diisocyanate, tetramethylene-1,4-diisocyanate, hexamethylene-1,6-diisocyanate, dodecamethylene-1,12-diisocyanate, phenyl-1,3,5-triisocyanate, diphenylmethane-2,4,4'-triisocyanate, diphenylmethane-2,5,4'-triisocyanate, triphenylmethane-2,4',4"-triisocyanate, triphenylmethane-4,4',4"-triisocyanate, diphenylmethane-2,4,2',4'-tetraisocyanate, diphenylmethane-2,5,2',5'-tetraisocyanate, cyclohexane-1,3,5-triisocyanate, cyclohexane-1,3,5-tris(methylisocyanate), 3,5-dimethylcyclohexane-1,3,5-tris(methylisocyanate), 1,3,5-trimethylcyclohexane-1,3,5-tris(methylisocyanate), dicyclohexylmethane-2,4,2'-triisocyanate, dicyclohexylmethane-2,4,4'-triisocyanate lysine isocyanate methyl ester, and prepolymers having isocyanates on both ends obtained by reacting a stoichiometrically excess quantity of one or more of these organic isocyanate compounds with a polyfunctional active hydrogen-containing compound. Of these, biscyclohexylmethane diisocyanate and hexamethylene diisocyanate are preferred. They may be employed singly or in combinations of two or more.

The polyfunctional alcohols may be in the form of a single polyfunctional alcohol, or in the form of a mixture with two or more polyfunctional alcohols. Examples of these polyfunctional alcohols are: glycols such as ethylene glycol, triethylene glycol, diethylene glycol, polyethylene glycol, propylene glycol, polypropylene glycol, and neopentyl glycol; diols such as butanediol, pentanediol, hexanediol, heptanediol, and tetramethylene glycol; bisphenols; compounds in the form of these polyfunctional alcohols modified by polyethyleneoxy chains or polypropyleneoxy chains; and compounds in the form of these polyfunctional alcohols modified by polyethyleneoxy chains or polypropyleneoxy chains, such as glycerin, trimethylolpropane, butanetriol, pentanetriol, hexanetriol, decanetriol, and other triols.

The content of the above-described matrix-forming components (or matrix) in the optical recording composition of the present invention is desirably 10 to 95 weight percent, preferably 35 to 90 weight percent. When the content is equal to or greater than 10 weight percent, stable interference images can be readily achieved. At equal to or less than 95 weight percent, desirable properties can be obtained from the perspective of diffraction efficiency.

Other components

Polymerization inhibitors and oxidation inhibitors may be added to the optical recording composition of the present invention to improve the storage stability of the optical recording composition, as needed.
Examples of polymerization inhibitors and oxidation inhibitors are: hydroquinone, p-benzoquinone, hydroquinone monomethyl ether, 2,6-ditert-butyl-p-cresol, 2,2'-methylenebis(4-methyl-6-tert-butylphenol), triphenylphosphite, trisnonylphenylphoshite, phenothiazine, and N-isopropyl-N'-phenyl-p-phenylenediamine.
The quantity of polymerization inhibitor or oxidation inhibitor added is preferably equal to or less than 3 weight percent of the total quantity of recording monomer. When the quantity added exceeds 3 weight percent, polymerization may slow down, and in extreme cases, ceases.

As needed, a sensitizing dye may be added to the optical recording composition of the present invention. Known compounds such as those described in "Research Disclosure, Vol. 200, 1980, December, Item 20036" and "Sensitizers" (pp. 160-163, Kodansha, ed. by K. Tokumaru and M. Okawara, 1987) and the like may be employed as sensitizing dyes.
Specific examples of sensitizing dyes are: 3-ketocoumarin compounds described in Japanese Unexamined Patent Publication (KOKAI) Showa No. 58-15603; thiopyrilium salt described in Japanese Unexamined Patent Publication (KOKAI) Showa No. 58-40302; naphthothiazole merocyanine compounds described in Japanese Examined Patent Publications (KOKOKU) Showa Nos. 59-28328 and 60-53300; and merocyanine compounds described in Japanese Examined Patent Publications (KOKOKU) Showa Nos. 61-9621 and 62-3842 and Japanese Unexamined Patent Publications (KOKAI) Showa Nos. 59-89303 and 60-60104.
Further examples are the dyes described in "The Chemistry of Functional Dyes" (1981, CMC Press, pp. 393-416) and "Coloring Materials" (60 [4] 212-224 (1987)). Specific examples are cationic methine dyes, cationic carbonium dyes,

cationic quinoneimine dyes, cationic indoline dyes, and cationic styryl dyes.
Further, keto dyes such as coumarin (including ketocoumarin and sulfonocoumarin) dyes, merostyryl dyes, oxonol dyes, and hemioxonol dyes; nonketo dyes such as nonketo polymethine dyes, triarylmethane dyes, xanthene dyes, anthracene dyes, rhodamine dyes, acrylidine dyes, aniline dyes, and azo dyes; nonketo polymethine dyes such as azomethine dyes, cyanine dyes, carbocyanine dyes, dicarbocyanine dyes, tricarbocyanine dyes, hemicyanine dyes, and styryl dyes; and quinone imine dyes such as azine dyes, oxazine dyes, thiazine dyes, quinoline dyes, and thiazole dyes are included among the spectral sensitizing dyes.
These sensitizing dyes may be employed singly or in combinations of two or more.

A photo-heat converting material can be incorporated into the optical recording composition of the present invention for enhancing the sensitivity of the recording layer formed with the optical recording composition.
The photo-heat converting material is not specifically limited, and may be suitably selected based on the functions and properties desired. For example, for convenience during addition to the recording layer with the photopolymer and so as not to scatter incident light, an organic dye or pigment is desirable. From the perspectives of not absorbing and not scattering light from the light source employed in recording, infrared radiation-absorbing dyes are desirable.
Such infrared radiation-absorbing dyes are not specifically limited, and may be suitably selected based on the objective. However, cationic dyes, complex-forming dyes, quinone-based neutral dyes, and the like are suitable. The maximum absorption wavelength of the infrared radiation-absorbing dye preferably falls within a range of 600 to 1,000 nm, more preferably a range of 700 to 900 nm.
The content of infrared radiation-absorbing dye in the optical recording composition of the present invention can be determined based on the absorbance at the wavelength of maximum absorbance in the infrared region in the recording medium formed with the optical recording composition of the present invention. This absorbance preferably falls within a range of 0.1 to 2.5, more preferably a range of 0.2 to 2.0.

As needed, the optical recording composition of the present invention may comprise a component that can diffuse into the inverse direction with that of the polymerizable components in order to reduce the volume change at polymerization, or a compound having an acid cleavage configuration may be added to the holographic recording composition in addition to the polymers.

The optical recording composition of the present invention can be employed as various holographic recording compositions capable of recording information when irradiated with a light containing information. In particular, it is suited to use as a volume holographic recording composition. A recording layer can be formed by coating the optical recording composition of the present invention on a substrate, for example. When the optical recording composition of the present invention contains a thermosetting compound such as those set forth above, a matrix can be formed by promoting the curing reaction by heating following coating. The heating conditions can be determined based on the thermosetting resin employed. The recording layer can be formed by casting when the viscosity of the optical recording composition is adequately low. When the viscosity is so high that casting is difficult, a dispenser can be employed to spread a recording layer on a lower substrate, and an upper substrate pressed onto the recording layer so as to cover it and spread it over the entire surface, thereby forming a recording medium.

HOLOGRAPHIC RECORDING MEDIUM

The holographic recording medium of the present invention comprises a recording layer comprising the cyclic allyl sulfide compound denoted by general formula (I). The recording layer can be formed with the optical recording composition of the present invention. For example, the recording layer comprised of the optical recording composition of the present invention can be formed by the above-described method.

The holographic recording medium of the present invention comprises the cyclic allyl sulfide compound denoted by general formula (I) in a recording layer. Since the compound denoted by general formula (I) can undergo little volumetric shrinkage, a medium for high density recording that permits high-sensitivity recording and reproduction while affording good multiplex recording characteristics can be formed. To confirm that the compound denoted by general formula (I) is contained in the recording layer, the recording layer portion can be extracted with tetrahydrofuran (THF) or dioxane and the peak corresponding to the compound denoted by general formula (I) detected by gas chromatography (GC).
The content of the compound denoted by general formula (I) in the recording layer, in the same manner as the content in the optical recording composition of the present invention as set forth above, is desirably 1 to 50 weight percent, preferably 1 to 30 weight percent, and more preferably, 3 to 10 weight percent. When the content is equal to or lower than 50 weight percent, stable interference images can be readily ensured. At equal to or higher than 1 weight percent, desirable properties can be achieved from the perspective of diffraction efficiency. Details relating to the individual components in the recording layer of the holographic recording medium of the present invention are as set forth above for the optical recording composition of the present invention.

The holographic recording medium of the present invention comprises the above recording layer (holographic recording layer), and preferably comprises a lower substrate, a filter layer, a holographic recording layer, and an upper

substrate. As needed, it may comprise additional layers such as a reflective layer, filter layer, first gap layer, and second gap layer.

The holographic recording medium of the present invention is capable of recording and reproducing information through utilization of the principle of the hologram. This may be a relatively thin planar hologram that records two-dimensional information or the like, or a volumetric hologram that records large quantities of information, such as three-dimensional images. It may be either of the transmitting or reflecting type. Since the holographic recording medium of the present invention is capable of recording high volumes of information, it is suitable for use as a volume holographic recording medium of which high recording density is demanded.

The method of recording a hologram on the holographic recording medium of the present invention is not specifically limited; examples are amplitude holograms, phase holograms, blazed holograms, and complex amplitude holograms. Among these, a preferred method is the so-called "collinear method" in which recording of information in volume holographic recording regions is carried out by irradiating an informing light and a reference light onto a volume holographic recording area as coaxial beams to record information by means of interference pattern through interference of the informing light and the reference light.

Details of substrates and various layers that can be incorporated into the holographic recording medium of the present invention will be described below.

- Substrate -

The substrate is not specifically limited in terms of its shape, structure, size, or the like; these may be suitably selected based on the objective. For example, the substrate may be disk-shaped, card-shaped, or the like. A substrate of a material capable of ensuring the mechanical strength of the holographic recording medium can be suitably selected. When the light employed for recording and reproducing enters after passing through the substrate, a substrate that is adequately transparent at the wavelength region of the light employed is desirable.

Normally, glass, ceramic, resin, or the like is employed as the substrate material. From the perspectives of moldability and cost, resin is particularly suitable. Examples of such resins are: polycarbonate resin, acrylic resin, epoxy resin, polystyrene resin, acrylonitrile - styrene copolymers, polyethylene resin, polypropylene resin, silicone resin, fluorine resin, ABS resin, and urethane resin. Of these, from the perspective of moldability, optical characteristics, and cost, polycarbonate resin and acrylic resin are preferred. Synthesized resins and commercially available resins may both be employed as substrates.

Normally, address servo areas are provided on the substrate at prescribed angular intervals as multiple positioning areas extending linearly in a radial direction, with the fan-shaped intervals between adjacent address servo areas serving as data areas. Information for operating focus servos and tracking servos by the sampled servo method, as well as address information, is recorded (preformatted) as pre-embossed pits (servo pits) or the like in address servo areas. Focus servo operation can be conducted using the reflective surface of a reflective film. Wobble pits, for example, can be employed as information for operating a tracking servo. When the holographic recording medium is card-shaped, it is possible not to have a servo pit pattern.

The thickness of the substrate is not specifically limited, and may be suitably selected based on the objective: a thickness of 0.1 to 5 mm is preferable, with 0.3 to 2 mm being preferred. A substrate thickness of equal to or greater than 0.1 mm is capable of preventing shape deformation during disk storage, while a thickness of equal to or less than 5 mm can avoid an overall disk weight generating an excessive load on the drive motor.

- Recording Layer -

The recording layer can be formed with the optical recording composition of the present invention and is capable of recording information by holography. The thickness of the recording layer is not specifically limited, and may be suitably selected based on the objective. A recording layer thickness falling within a range of 1 to 1,000 micrometers yields an adequate S/N ratio even when conducting 10 to 300 shift multiplexing, and a thickness falling within a range of 100 to 700 micrometers is advantageous in that it yields a markedly good S/N ratio.

-Reflective Film -

A reflective film can be formed on the servo pit pattern surface of the substrate.
A material having high reflectance for the informing light and reference light is preferably employed as the material of the reflective film. When the wavelength of the light employed as the informing light and reference light ranges from 400 to 780 nm, examples of desirable materials are Al, Al alloys, Ag, and Ag alloys. When the wavelength of the light employed as the informing light and reference light is equal to or greater than 650 nm, examples of desirable materials are Al, Al alloys, Ag, Ag alloys, Au, Cu alloys, and TiN.

By employing an optical recording medium that reflects light as well as can be recorded and/or erased information such as a DVD (digital video disk) as a reflective film, it is possible to record and rewrite directory information, such as the areas in which holograms have been recorded, when rewriting was conducted, and the areas in which errors are present and for which alternate processing has been conducted, without affecting the hologram.

The method of forming the reflective film is not specifically limited and may be suitably selected based on the objective. Various vapor phase growth methods such as vacuum deposition, sputtering, plasma CVD, optical CVD, ion plating, and electron beam vapor deposition may be employed. Of these, sputtering is superior from the perspectives of mass production, film quality, and the like.

The thickness of the reflective film is preferably equal to or greater than 50 nm, more preferably equal to or greater than 100 nm, to obtain adequate reflectance.

- Filter Layer -

A filter layer can be provided on the servo pits of the substrate, on the reflective layer, or on the first gap layer, described further below.

The filter layer has a function of reflecting selective wavelengths in which, among multiple light rays, only light of a specific wavelength is selectively reflected, permitting passing one light and reflecting a second light. It also has a function of preventing generation of noise in which irregular reflection of the informing light and the reference light by the reflective film of the recording medium is prevented without a shift in the selectively reflected wavelength even when the angle of incidence varies. Therefore, by stacking filter layers on the recording medium, it is possible to perform optical recording with high resolution and good diffraction efficiency.

The filter layer is not specifically limited and may be suitably selected based on the objective. For example, the filter layer can be comprised of a laminate in which at least one of a dichroic mirror layer, coloring material-containing layer, dielectric vapor deposition layer, single-layer or two- or more layer cholesteric layer and other layers suitably selected as needed is laminated. The thickness of the filter layer is not specifically limited and may be, for example, about 0.5 to 20 micrometers.

The filter layer may be laminated by direct application on the substrate or the like with the recording layer, or may be laminated on a base material such as a film to prepare a filter layer which is then laminated on the substrate.

- First Gap Layer -

The first gap layer is formed as needed between the filter layer and the reflective film to flatten the surface of the lower substrate. It is also effective for adjusting the size of the hologram that is formed in the recording layer. That is, since the recording layer should form a certain size of the interference region of the recording-use reference light and the informing light, it is effective to provide a gap between the recording layer and the servo pit pattern.

For example, the first gap layer can be formed by applying a material such as an ultraviolet radiation-curing resin from above the servo pit pattern and curing it. When employing a filter layer formed by application on a transparent base material, the transparent base material can serve as the first gap layer.

The thickness of the first gap layer is not specifically limited, and can be suitably selected based on the objective. A thickness of 1 to 200 micrometers is desirable.

- Second Gap Layer -

The second gap layer is provided as needed between the recording layer and the filter layer.

The material of the second gap layer is not specifically limited, and may be suitably selected based on the objective. Examples are: transparent resin films such as triacetyl cellulose (TAC), polycarbonate (PC), polyethylene terephthalate (PET), polystyrene (PS), polysulfone (PSF), polyvinylalcohol (PVA), and poly(methyl methacrylate) (PMMA); and norbornene resin films such as a product called ARTON film made by JSR Corporation and a product called Zeonoa made by Japan Zeon Co. Of these, those that are highly isotropic are desirable, with TAC, PC, the product called ARTON, and the product called Zeonoa being preferred.

The thickness of the second gap layer is not specifically limited and may be suitably selected based on the objective. A thickness of 1 to 200 micrometers is desirable.

Specific embodiments of the holographic recording medium of the present invention will be described in greater detail below. However, the present invention is not limited to these specific embodiments.

<First implementation embodiment>

Fig. 1 is a schematic cross-sectional view of the configuration of the holographic recording medium according

to the first implementation embodiment. In holographic recording medium 21 according to the first implementation embodiment, a servo pit pattern 3 is formed on substrate 1 made of polycarbonate resin or glass, and aluminum, gold, platinum, or the like is coated on servo pit pattern 3 to provide reflective film 2. In Fig. 1, servo pit pattern 3 has been formed over the entire surface of lower substrate 1, but the servo pit pattern may be formed cyclically. Servo pit pattern 3 is normally 1,750 Angstroms (175 nm) in height, and is quite small relative to the thickness of the substrate and the other layers.

First gap layer 8 is formed by spin coating or the like a material such as an ultraviolet radiation-curing resin on reflective film 2 of lower substrate 1. First gap layer 8 is effective for both the protection of reflective layer 2 and the adjustment of the size of the hologram formed in recording layer 4. That is, providing a gap between recording layer 4 and servo pit pattern 3 is effective for the formation of an interference area for the recording-use reference light and informing light of a certain size in recording layer 4.

Filter layer 6 is provided on first gap layer 8. Recording layer 4 is sandwiched between filter layer 6 and upper substrate 5 (a polycarbonate resin substrate or glass substrate) to form holographic recording medium 21.

Fig. 1 shows a filter layer 6 that passes only infrared radiation and blocks light of all other colors. Accordingly, since the informing light and recording and reproducing-use reference light are blue, they are blocked by filter layer 6 and do not reach reflective film 2. They return, exiting from entry and exit surface A.

Filter layer 6 is a multilayered vapor deposition film comprised of high refractive index layers and low refractive index layers deposited in alternating fashion.

Filter layer 6, comprised of a multilayered vapor deposition film, may be formed directly on first gap layer 8 by vacuum vapor deposition, or a film comprised of a multilayered vapor deposition film formed on a base material may be punched into the shape of a holographic recording medium to employed as filter layer 6.

In this embodiment, holographic recording medium 21 may be disk-shaped or card-shaped. When card-shaped, the servo pit pattern may be absent. In holographic recording medium 21, the lower substrate is 0.6 mm, first gap layer 8 is 100 micrometers, filter layer 6 is 2 to 3 micrometers, recording layer 4 is 0.6 mm, and upper substrate 5 is 0.6 mm in thickness, for a total thickness of about 1.9 mm.

An optical system applicable for the recording of information on and the reproduction of information from holographic recording medium 21 will be described with reference to Fig. 3.

First, a light (red light) emitted by a servo laser is nearly 100 percent reflected by dichroic mirror 13, passing through objective lens 12. Objective lens 12 directs the servo light onto holographic recording medium 21 so that it focuses at a point on reflective film 2. That is, dichroic mirror 13 passes light of green and blue wavelengths while reflecting nearly 100 percent of red light. The servo light entering entry and exit surface A to which and from which the light enters and exits of holographic recording medium 21 passes through upper substrate 5, recording layer 4, filter layer 6, and first gap layer 8, is reflected by reflective layer 2, and passes back through first gap layer 8, filter layer 6, recording layer 4, and upper substrate 5, exiting entry and exit surface A. The returning light that exits passes through objective lens 12, is nearly 100 percent reflected by dichroic mirror 13, and the servo information is detected by a servo information detector (not shown in Fig. 3). The servo information that is detected is employed for focus servo, tracking servo, slide servo, and the like. When the hologram material included in recording layer 4 is not sensitive to red light, the servo light passes through recording layer 4 without affecting recording layer 4, even when the servo light is randomly reflected by reflective film 2. Since the light in the form of the servo light reflected by reflective film 2 is nearly 100 percent reflected by dichroic mirror 13, the servo light is not detected by a CMOS sensor or CCD 14 for reproduction image detection and thus does not constitute noise to the reproduction light.

The informing light and recording-use reference light generated by the recording/reproducing laser passes through polarizing plate 16 and is linearly polarized. It then passes through half mirror 17, becoming circularly polarized light at the point where it passes through 1/4 wavelength plate 15. The light then passes through dichroic mirror 13, and is directed by objective lens 12 onto holographic recording medium 21 so that the informing light and recording-use reference light form an interference pattern in recording layer 4. The informing light and recording-use reference light enter through entry and exit surface A, interfering with each other to form an interference pattern in recording layer 4. Subsequently, the informing light and recording-use reference light pass through recording layer 4, entering filter layer 6. However, they are reflected before reaching the bottom surface of filter layer 6, returning. That is, neither the informing light nor the recording-use reference light reaches reflective film 2. That is because filter layer 6 is a multilayered vapor deposition layer in which multiple high refractive index and low refractive index layers are alternatively laminated, and has the property of passing only red light.

<Second implementation embodiment>

Fig. 2 is a schematic cross-sectional view of the configuration of the holographic recording medium according to the second implementation embodiment. A servo pit pattern 3 is formed on substrate 1 made of polycarbonate resin or glass in the holographic recording medium 22 accoding to the second implementation embodiment. Reflective film 2

is provided by coating aluminum, gold, platinum, or the like on the surface of servo pit pattern 3. Servo pit pattern 3 is normally 1,750 Angstroms (175 nm) in height in the same manner as in the first implementation embodiment.

The configuration of the second implementation embodiment differs from that of the first implementation embodiment in that second gap layer 7 is provided between filter layer 6 and recording layer 4 in holographic recording medium 22 according to the second implementation embodiment. A point at which the informing light and reproduction light are focused is present in second gap layer 7. When this area is embedded in a photopolymer, excessive consumption of monomer occurs due to excess exposure, and multiplexing recording capability diminishes. Accordingly, it is effective to provide a nonreactive transparent second gap layer.

Filter layer 6 in the form of a multilayered vapor deposition film comprised of multiple layers in which multiple high refractive index and low refractive index layers are alternately laminated is formed over first gap layer 8 once first gap layer 8 has been formed, and the same one as employed in the first implementation embodiment can be employed as filter layer 6 in the second implementation embodiment.

In holographic recording medium 22 of the second implementation embodiment, lower substrate 1 is 1.0 mm, first gap 8 is 100 micrometers, filter layer 6 is 3 to 5 micrometers, second gap layer 7 is 70 micrometers, recording layer 4 is 0.6 mm, and upper substrate 5 is 0.4 mm in thickness, for a total thickness of about 2.2 mm.

When recording or reproducing information, a red servo light and a green informing light and recording/reproducing reference light are directed onto holographic recording medium 22 of the second implementation embodiment having the configuration set forth above. The servo light enters through entry and exit surface A, passing through recording layer 4, second gap layer 7, filter layer 6, and first gap layer 8, and is reflected by reflective film 2, returning. The returning light then passes sequentially back through first gap layer 8, filter layer 6, second gap layer 7, recording layer 4, and upper substrate 5, exiting through entry and exit surface A. The returning light that exits is used for focus servo, tracking servo, and the like. When the hologram material included in recording layer 4 is not sensitive to red light, the servo light passes through recording layer 4 and is randomly reflected by reflective film 2 without affecting recording layer 4. The green informing light and the like enters through entry and exit surface A, passing through recording layer 4 and second gap layer 7, and is reflected by filter layer 6, returning. The returning light then passes sequentially back through second gap layer 7, recording layer 4, and upper substrate 5, exiting through entry and exit layer A. During reproduction, as well, the reproduction-use reference light and the reproduction light generated by irradiating the reproduction-use reference light onto recording layer 4 exit through entry and exit surface A without reaching reflective film 2. The optical action around holographic recording medium 22 (objective lens 12, filter layer 6, and detectors in the form of CMOS sensors or CCD 14 in Fig. 3) is identical to that in the first implementation embodiment and thus the description thereof is omitted.

The method of recording information on the holographic recording medium of the present invention will be described below.

An interference image can be formed on the recording layer of the holographic recording medium of the present invention by irradiation of an informing light and a reference light to the recording layer, and a fixing light can be irradiated to the recording layer on which the interference image has been formed to fix the interference image.

A light having coherent properties can be employed as the informing light. By irradiating the informing light and reference light onto the recording medium so that the optical axes of the informing light and reference light are coaxial, it is possible to record in the recording layer an interference image generated by interference of the informing light and reference light. Specifically, a informing light imparted with a two dimensional intensity distribution and a reference light of intensity nearly identical to that of the informing light are superposed in the recording layer and the interference pattern that they form is used to generate an optical characteristic distribution in the recording layer, thereby recording information. The wavelengths of the informing light and reference light are preferably equal to or greater than 400 nm, more preferably 400 to 2,000 nm, and further preferably, 400 to 700 nm.

After recording information (forming an interference image) by irradiating the informing light and reference light, a fixing light can be irradiated to fix the interference image. The wavelength of the fixing light is preferably less than 400 nm, more preferably equal to or greater than 100 nm but less than 400 nm, and further preferably, equal to or greater than 200 nm but less than 400 nm.

Information can be reproduced by irradiating a reference light onto an interference image formed by the above-described method. In the course of reading (reproducing) information that has been written, just a reference light is irradiated onto the recording layer with the same arrangement as during recording, causing a reproduction light having an intensity distribution corresponding to the optical characteristic distribution formed in the recording layer to exit the recording layer.

An optical recording and reproducing device suited to use in the recording and reproducing of information in the holographic recording medium of the present invention will be described with reference to Fig. 4.

The optical recording and reproducing device 100 of Fig. 4 is equipped with spindle 81 on which is mounted holographic recording medium 20, spindle motor 82 rotating spindle 81, and spindle servo circuit 83 controlling spindle motor 82 so that it maintains holographic recording medium 20 at a prescribed rpm level.

Recording and reproducing device 100 is further equipped with pickup 31 for recording information by irradiating a informing light and a recording-use reference light onto holographic recording medium 20, and for reproducing information that has been recorded on holographic recording medium 20 by irradiating a reproducing-use reference light onto holographic recording medium 20 and detecting the reproduction light; and driving device 84 capable of moving pickup 31 radially with respect to holographic recording medium 20.

Optical recording and reproducing device 100 is equipped with detection circuit 85 for detecting focus error signal FE, tracking error signal TE, and reproduction signal RF based on the output signals of pickup 31; focus servo circuit 86 that operates a focus servo by driving an actuator in pickup 31 to move an objective lens (not shown in Fig. 4) in the direction of thickness of holographic recording medium 20 based on focus error signal FE detected by detection circuit 85; tracking servo circuit 87 that operates a tracking servo by driving an actuator in pickup 31 to move an objective lens in the radial direction of holographic recording medium 20 based on tracking error signal TE detected by detection circuit 85; and slide servo circuit 88 that operates a slide servo by controlling drive device 84 to move pickup 31 in the radial direction of holographic recording medium 20 based on instructions from a controller, described further below, and tracking error signal TE.

Optical recording and reproducing device 100 is further equipped with signal processing circuit 89 that decodes the output data of a CCD array or CMOS in pickup 31 to reproduce data recorded in the data areas of holographic recording medium 20, reproduces a base clock based on reproduction signal RF from detection circuit 85, and determines addresses; controller 90 that effects overall control of optical recording and reproducing device 100; and operation element 91 providing various instructions to controller 90. Controller 90 inputs the base clock and address information outputted by signal processing circuit 89 and controls pickup 31, spindle servo circuit 83, slide servo circuit 88, and the like. Spindle servo circuit 83 inputs the base clock that is outputted by signal processing circuit 89. Controller 90 comprises a central processing unit (CPU), read only memory (ROM), and random access memory (RAM). The functions of controller 90 can be realized by having the CPU that employs the RAM as a work area and execute programs stored in the ROM.

EXAMPLES

The present invention will be described in detail below based on examples. However, the present invention is not limited to the examples.

(Examples of synthesizing the optical recording compound)

Example Compounds M-17, M-18, M-47, M-48, and M-35 were synthesized by the scheme below. Various compounds denoted by general formula (I) can be synthesized based on the following scheme.

(i) Eight-membered ring

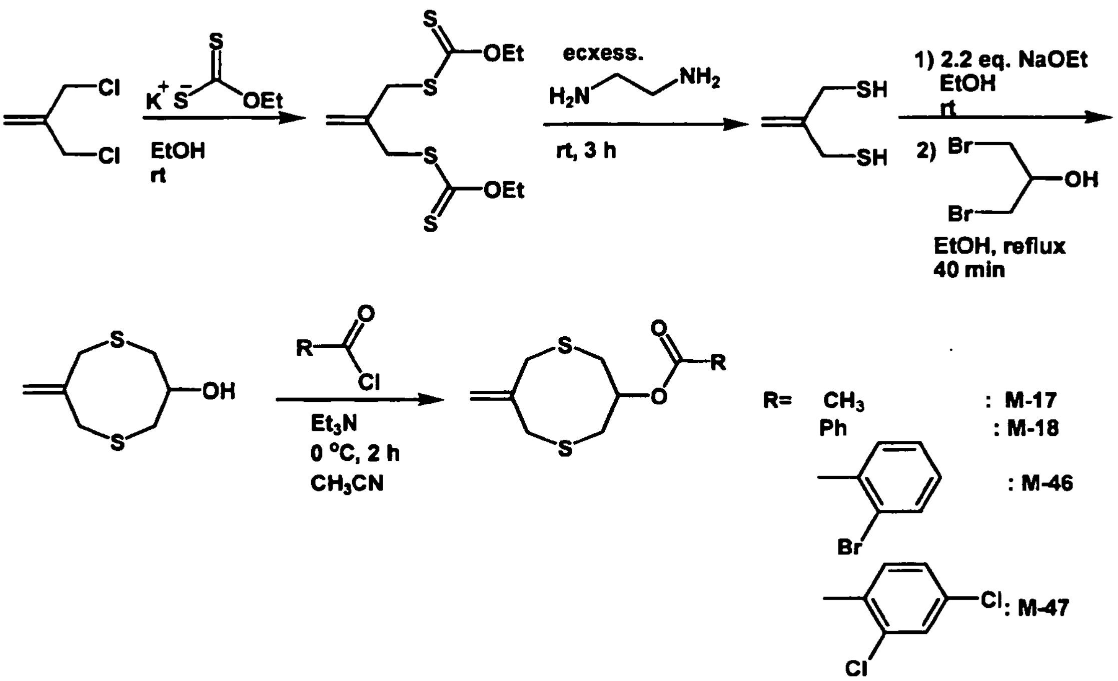

(ii) Seven-membered ring (1)

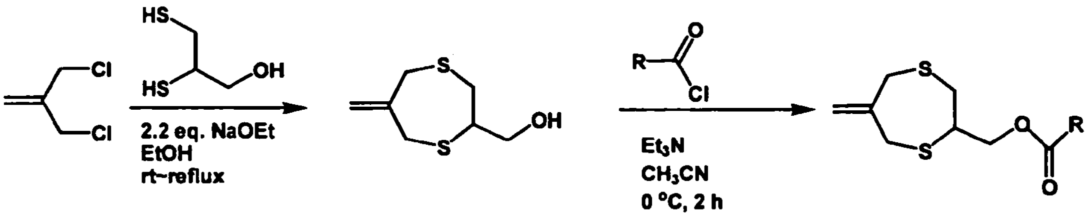


R=Me : M-45

(iii) Seven-membered ring (2)

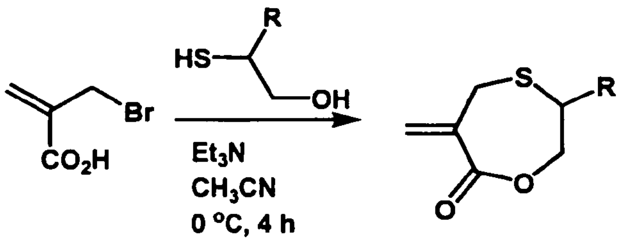


R= H : M-35

The identification results of the compounds synthesized by the above scheme are given below.

M-17 ; $^1$H NMR (300 MHz, $CDCl_3$) δ 2.00 (s, 3H), 3.05 (m, 4H), 3.21 (s, 4H), 4.95 (m, 1 H), 5.20 (s, 2H)
M-18;$^1$H NMR (300 MHz, $CDCl_3$) δ 3.16 (d, 2H), 3.18 (d, 2H), 3.23 (s, 4H), 5.20 (s, 2H), 5.20 (m, 1H), 7.30 (m, 3H), 8.0 (m, 3H)
M-47 ;$^1$H NMR (300 MHz, $CDCl_3$) δ 3.16 (d, 2H), 3.18 (d, 2H), 3.24 (s, 4H), 5.20 (s, 2H), 5.22 (m, 1H), 7.36 (m, 2H), 7.79 (dd, 1H), 7.80 (dd, 1H)
M-48;$^1$H NMR (300 MHz, $CDCl_3$) δ 3.16 (d, 2H), 3.18 (d, 2H), 3.24 (s, 4H), 5.20 (s, 2H), 5.20 (m, 1H), 7.30 (dd, 1H), 7.48 (d, 1H), 7.79 (d, 1H)M-4 4 ;$^1$H NMR (300 MHz, $CDCl_3$) δ2.00 (s, 3H), 2.80-3.80(m, 7H), 4.10~4.30 (m, 2H), 4.85 (d, 2H)
M-35 ; $^1$H NMR (300 MHz, $CDCl_3$) δ 2.95 (m, 2H), 2.36 (s, 2H), 4.50 (m, 2H), 5.60 (s, 1H), 5.85 (s, 1H)

(Examples of synthesizing photo-induced radical polymerization initiators)

Example Compounds (I-2), (I-3), (I-8), and (I-9) were synthesized by the general scheme given below based on the method described in DE2830927A1. In the following scheme, $R^a$ to $R^c$ have the same definitions as in general formula (IV). Various compounds in which $R^a$ to $R^c$ vary can be synthesized by the following scheme by employing different starting materials in synthesis.

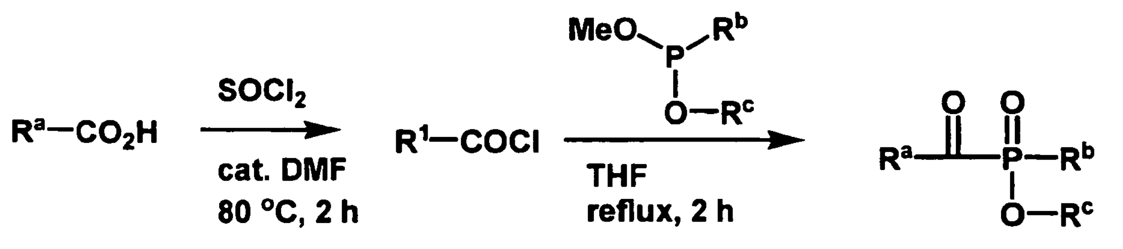


The identification results of Example Compounds (1-2), (I-3), (1-8) and (I-9) thus obtained are given below.

<I-2> $^1$H NMR (300 MHz, $CDCl_3$) δ 1.32 (t, 3H), 3.62(s, 6H), 4.13-4.26 (m, 2H), 6.4 9 (d, 2H), 7.32(t, 1H), 7.40-7.51 (m, 2H), 7.54-7.59(m, 1H), 7.79 (dd, 2H)

<I-3> $^1H$ NMR (300 MHz, $CDCl_3$) δ 1.37 (d, 3H), 1.39 (d, 3H), 4.91-4.98 (m, 1H), 7. 29 (s, 3H), 7.47-7.51 (m, 2H), 7.59-7.61 (m ,1H), 7.91 (dd, 2H)
<I-8> $^1H$ NMR (300 MHz, $CDCl_3$) δ 1.34 (d, 3H), 1.38 (d, 3H), 3.67(s, 6H), 4.68-4.8 0 (m, 1H), 7.32 (t, 1H), 7.41-7.50 (m, 2H), 7.52-7.59 (m ,1H), 7.90 (dd, 2H)
<I-9> $^1H$ NMR (300 MHz, $CDCl_3$) δ 1.36 (t, 3H), 4.41 (q, 2H), 7.28 (s, 3H), 7.58-7.6 4 (m, 1H), 7.93 (dd, 2H)

Example 1

-- Preparation of holographic recording composition --

A 31.5 g quantity of biscyclohexylmethane diisocyanate, 61.2 g of polypropylene oxide triol (weight average molecular weight 1,000), 2.5 g of tetramethylene glycol, 3.1 g of Example Compound M-8, 0.69 g of the photopolymerization initiator bis(η5-2,4-cyclopentanediene-1-yl)bis(2,6-difluoro-3-(1H-pyrrole-1-yl)phenyl)titanium (Irgacure 784, made by Chiba Specialty Chemicals), and 1.01 g of dibutyl tin laurate were mixed under a nitrogen gas flow to prepare a holographic recording composition.

Example 2

-- Preparation of holographic recording composition --

With the exception that Example Compound M-16 was employed instead of Example Compound M-8 in Example 1, a holographic recording composition was prepared in the same manner as in Example 1.

Example 3

-- Preparation of holographic recording composition --

With the exception that Example Compound M-18 was employed instead of Example Compound M-8 in Example 1, a holographic recording composition was prepared in the same manner as in Example 1.

Example 4

-- Preparation of holographic recording composition --

With the exception that Example Compound M-21 was employed instead of Example Compound M-8 in Example 1, a holographic recording composition was prepared in the same manner as in Example 1.

Example 5

-- Preparation of holographic recording composition --

With the exception that Example Compound M-35 was employed instead of Example Compound M-8 in Example 1, a holographic recording composition was prepared in the same manner as in Example 1.

Example 6

-- Preparation of holographic recording composition --

A 6.4 g quantity of hexamethylene diisocyanate (made by Mitsui Chemicals Polyurethanes, Inc.; product name: Takenate T-700), 5.21 g of polypropylene oxide triol (made by Mitsui Chemicals Polyurethanes, Inc.; product name: MN-300), 4.64 g of polyethylene glycol (made by Tokyo Chemical Industry Co., Ltd.), 1.85 g of Example Compound M-18, 0.16 g of photopolymerization initiator (2,4,6-trimethylbenzoylphenylphosphinic acid ethyl ester; product name: Lucirin TPO-L, made by BASF Japan), and 0.20 g of amine curing catalyst (made by SAN-APRO; product name: U-CAT 410) were mixed under a nitrogen flow to prepare a holographic recording composition.

Example 7

-- Preparation of holographic recording composition --

With the exception that 0.16 g of Example Compound (I-8) was employed instead of the 0.16 g of photopolymerization initiator (2,4,6-trimethylbenzoylphenylphosphinic acid ethyl ester; product name: Lucirin TPO-L, made by BASF Japan) employed in Example 6, a holographic recording composition was prepared in the same manner as in Example 6.

Example 8

-- Preparation of holographic recording composition --

With the exception that Example Compound M-46 was employed instead of Example Compound M-18 in Example 7, a holographic recording composition was prepared in the same manner as in Example 7.

Example 9

-- Preparation of holographic recording composition -

With the exception that Example Compound M-47 was employed instead of Example Compound M-18 in Example 7, a holographic recording composition was prepared in the same manner as in Example 7.

Comparative Example 1

-- Preparation of holographic recording composition --

A 31.5 g quantity of biscyclohexylmethane diisocyanate, 61.2 g of polypropylene oxide triol (weight average molecular weight 1,000), 2.5 g of tetramethylene glycol, 3.1 g of monomer in the form of Comparative Compound R-1 below (2,4,6-tribromophenyl acrylate), 0.69 g of photopolymerization initiator (Irgacure 784, made by Chiba Specialty Chemicals), and 1.01 g of dibutyl tin laurate were mixed under a nitrogen gas flow to prepare a holographic recording composition.

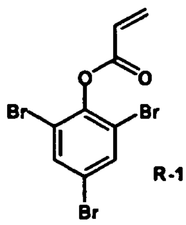

R-1

Comparative Example 2

-- Preparation of holographic recording composition --

A 31.5 g quantity of biscyclohexylmethane diisocyanate, 61.2 g of polypropylene oxide triol (weight average molecular weight 1,000), 2.5 g of tetramethylene glycol, 3.1 g of Comparative Compound R-2 below 0.69 g of photopolymerization initiator (Irgacure 784, made by Chiba Specialty Chemicals), and 1.01 g of dibutyl tin laurate were mixed under a nitrogen gas flow to prepare a holographic recording composition.

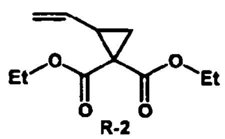

R-2

Comparative Example 3

-- Preparation of holographic recording composition --

A 6.4 g quantity of hexamethylene diisocyanate (made by Mitsui Chemicals Polyurethanes, Inc.; product name: Takenate T-700), 5.21 g of polypropylene oxide triol (made by Mitsui Chemicals Polyurethanes, Inc.; product name: MN-300), 4.64 g of polyethylene glycol (made by Tokyo Chemical Industry Co., Ltd.), 1.85 g of 2,4,6-tribromophenyl acrylate (made by Dai-ichi Kogyo Seiyaku Co., Ltd.; product name: BR-30), 0.16 g of photopolymerization initiator (2,4,6-trimethylbenzoylphenylphosphinic acid ethyl ester; product name: Lucirin TPO-L, made by BASF Japan), and 0.20 g of amine curing catalyst (made by SAN-APRO; product name: U-CAT 410) were mixed under a nitrogen flow to prepare a holographic recording composition.

Examples 10 to 18 and Comparative Examples 4 to 6

-- Preparation of optical recording medium --

A first substrate was prepared by subjecting one side of a glass sheet 0.5 mm in thickness to an antireflective treatment to impart a reflectance of 0.1 percent for perpendicularly incident light with the wavelengths of 532 nm and 405 nm.
A second substrate was prepared by subjecting one side of a glass sheet 0.5 mm in thickness to an aluminum vapor deposition treatment to impart a reflectance of 90 percent for perpendicularly incident light with the wavelengths of 532 nm and 405 nm.
A transparent polyethylene terephthalate sheet 500 micrometers in thickness was provided as a spacer on the side of the first substrate that had not been subjected to the antireflective treatment.
The holographic recording compositions of Examples 1 to 9 and Comparative Examples 1 to 3 were each separately placed on first substrates, the aluminum vapor deposited surface of the second substrates were stacked on the holographic recording composition in such a manner that air was not entrained, and the first and second substrates were bonded through the spacer. Subsequently, Examples 10 to 14 and Comparative Examples 4 and 5 were left for 24 hours at 45°C to prepare various optical recording media. Examples 15 to 18 and Comparative Example 6 were placed for 6 hours at 80°C to prepare various optical recording media. The thickness of the recording layers formed was 200 micrometers in all media prepared.

<Recording in the Optical Recording Medium and Evaluation>

Employing a collinear hologram recording and reproduction tester (SHOT-1000, made by Pulstec Industrial Co., Ltd.), a series of multiplexed holograms was written into the various optical recording media that had been prepared at a spot recording diameter of 200 micrometers at the focal position of the recording hologram, and the sensitivity (recording energy) and volumetric shrinkage of the media were measured as follows. The results are given in Table 1.

- Sensitivity Measurement -

The beam energy during recording ($mJ/cm^2$) was varied and the change in the error rate (BER: bit error rate) of the reproduced signal was measured. Normally, there is such a tendency that the luminance of the reproduced signal increases and the BER of the reproduced signal gradually drops with an increase in the irradiated light energy. In the measurement, the lowest light energy at which a fairly good reproduced image (BER < $10^{-3}$) was obtained was adopted as the recording sensitivity of the holographic recording medium. For Examples 10 to 14 and Comparative Example 4 and 5, the wavelength of the recording light and reference light was 532 nm, and the wavelength of the reproduction light was 532 nm. For Examples 15 to 18 and Comparative Example 6, the wavelength of the recording light and reference light was 405 nm, and the wavelength of the reproduction light was 405 nm.

- Volumetric Shrinkage of Medium -

Calculation from changes in the interference fringe due to planar wave two-beam interference is a known means of analyzing photopolymer shrinkage and expansion. In the fringe plane rotation (FPR) model, it is possible to evaluate shrinkage of the recording layer occurring between recording and reproduction from the difference between the angle during recording of a Bragg grating recorded at an angle on a recording medium and the optimal reproduction angle following recording (or after fixing). Fig. 5 is a conceptual diagram of this model. It is supposed that change in shrinkage before and after recording occurs in just the direction of thickness.
The change in incline of the interference fringe in the FPR model is given by the following equation.
$$\Phi^{*} = \Phi + \Delta\Phi = \arctan\left[\tan\Phi/(1-\alpha)\right] \cdots (1)$$

In the above equation, $\Phi$ denotes the incline of the interference fringe during recording and $\Phi^*$ denotes the incline of the interference fringe during reproduction, and $\alpha$ denotes the rate of change in the recording layer.
For the various recording media, an interference fringe (6 mm in diameter) of weak diffraction efficiency (equal to or less than 1 percent) was recorded at a prescribed angle $\Phi$ on a recording medium with a planar wave two-beam interference device with a laser having the recording wavelength (532 nm or 405 nm) indicated in Table 1. Subsequently, the recording medium was either exposed to light or irradiated with a fixing light (365 nm laser, spot diameter 10 mm) to completely consume the photoreactive compounds in the recording medium. Next, the dependence of the diffraction efficiency on the reproduction angle was measured and the angle of the interference fringe was measured again. The shrinkage rate $\alpha$ of the recording medium was estimated based on equation (1) from the change in the incline angle of the interference fringe during recording and after exposure to light or fixation.
Table 1

| | Holographic recording composition | Recording sensitivity | Volumetric Shrinkage % | Recording wavelength |
|---|---|---|---|---|
| Example 10 | Example 1 | 32 mJ/cm$^2$ | 0.14 | 532 nm |
| Example 11 | Example 2 | 40 mJ/cm$^2$ | 0.1 | |
| Example 12 | Example 3 | 19 mJ/cm$^2$ | 0.04 | |
| Example 13 | Example 4 | 23 mJ/cm$^2$ | 0.07 | |
| Example 14 | Example 5 | 33 mJ/cm$^2$ | 0.16 | |
| Example 15 | Example 6 | 55 mJ/cm$^2$ | 0.15 | 405 nm |
| Example 16 | Example 7 | 43 mJ/cm$^2$ | 0.12 | |
| Example 17 | Example 8 | 13 mJ/cm$^2$ | 0.11 | |
| Example 18 | Example 9 | 15 mJ/cm$^2$ | 0.12 | |
| Comp.Ex.4 | Comp.Ex.1 | 80 mJ/cm$^2$ | 0.65 | 532 nm |
| Comp.Ex.5 | Comp.Ex.2 | 500 mJ/cm$^2$ | 0.75 | |
| Comp.Ex.6 | Comp.Ex.3 | 80 mJ/cm$^2$ | 0.85 | 405 nm |

Table 1 reveals that the optical recording media of Examples 10 to 18, in which the holographic recording compositions of Examples 1 to 9 were employed, all exhibited better recording sensitivity as well as less volumetric shrinkage than the optical recording media of Comparative Examples 4 to 6, in which the holographic recording compositions of Comparative Examples 1 to 3 were employed.
The optical recording composition of the present invention is capable of high density recording, and is thus suitable for use in the manufacturing of various volume hologram-type optical recording media capable of high-density image recording.
Unless otherwise stated, a reference to a compound or component includes the compound or component by

itself, as well as in combination with other compounds or components, such as mixtures of compounds.

As used herein, the singular forms "a," "an," and "the" include the plural reference unless the context clearly dictates otherwise.

Additionally, the recitation of numerical ranges within this specification is considered to be a disclosure of all numerical values and ranges within that range. For example, if a range is from about 1 to about 50, it is deemed to include, for example, 1, 7, 34, 46.1, 23.7, or any other value or range within the range.

## Claims

1. An optical recording composition comprising a compound denoted by general formula (I):

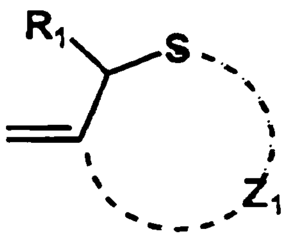

General Formula (I)

wherein $R_1$ denotes a hydrogen atom or an alkyl group, and $Z_1$ denotes a group forming a ring structure with the sulfur and carbon atoms adjacent to the group and the carbon atom bonded to the sulfur atom.

2. An optical recording composition according to Claim 1, which is a holographic recording composition.

3. An optical recording composition according to Claim 1 or Claim 2, wherein the compound denoted by general formula (I) is a compound denoted by general formula (II):

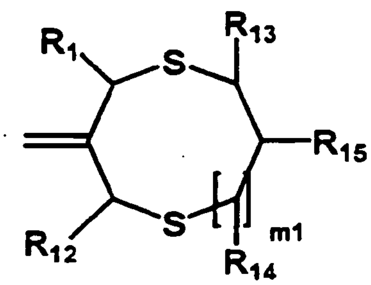

General Formula (II)

wherein $R_1$ is as defined in Claim 1; $R_{12}$ denotes a hydrogen atom or an alkyl group; each of $R_{13}$, $R_{14}$ and $R_{15}$ independently denotes a hydrogen atom, alkyl group, aryl group, heterocyclic group, alkoxy group, aryloxy group, alkythio group, arylthio group, alkoxycarbonyl group, aryloxycarbonyl group, acyloxy group, acylamino group, sulfonylamino group, amino group, acyl group or halogen group; and ml denotes 0 or 1.

4. An optical recording composition according to Claim 1 or Claim 2, wherein the compound denoted by general formula (I) is a compound denoted by general formula (III):

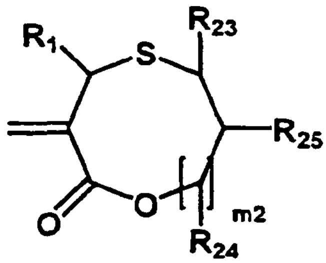

General Formula (III)

wherein $R_1$ is as defined in Claim 1; each of $R_{23}$, $R_{24}$ and $R_{25}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group; and m2 denotes 0 or 1.

**5.** An optical recording composition according to any preceding claim, further comprising a polyfunctional isocyanate and a polyfunctional alcohol.

**6.** An optical recording composition according to any preceding claim, further comprising a photo-induced radical polymerization initiator.

**7.** An optical recording composition according to Claim 6, wherein the photo-induced radical polymerization initiator is a compound denoted by general formula (IV).

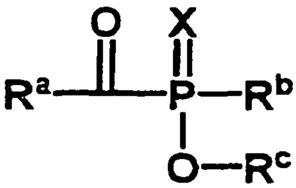

General Formula (IV)

wherein each of $R^a$, $R^b$ and $R^c$ independently denotes an alkyl group, aryl group or heterocyclic group, and X denotes an oxygen atom or sulfur atom.

**8.** A holographic recording medium comprising a recording layer, the recording layer comprising a compound denoted by general formula (I).

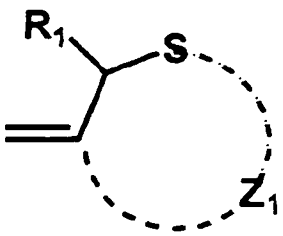

General Formula (I)

wherein $R_1$ denotes a hydrogen atom or an alkyl group, and $Z_1$ denotes a group forming a ring structure with the sulfur and carbon atoms adjacent to the group and the carbon atom bonded to the sulfur atom.

**9.** A holographic recording medium according to Claim 8, wherein the compound denoted by general formula (I) is a

compound denoted by general formula (II).

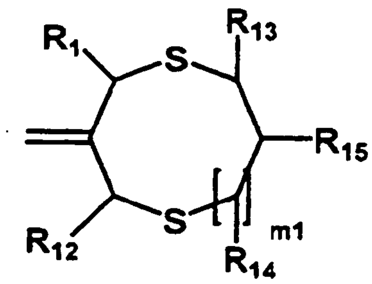

General Formula (II)

wherein $R_1$ is as defined in Claim 8; $R_{12}$ denotes a hydrogen atom or an alkyl group; each of $R_{13}$, $R_{14}$ and $R_{15}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group; and m 1 denotes 0 or 1.

**10.** A holographic recording medium according to Claim 8, wherein the compound denoted by general formula (I) is a compound denoted by general formula (III):

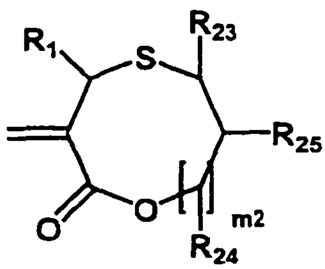

General Formula (III)

wherein $R_1$ is as defined in Claim 8; each of $R_{23}$, $R_{24}$ and $R_{25}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group; and m2 denotes 0 or 1.

**11.** A holographic recording medium according to any of Claims 8 to 10, wherein the recording layer further comprises a polyfunctional isocyanate and a polyfunctional alcohol.

**12.** A holographic recording medium according to any of Claims 8 to 11. wherein the recording layer further comprises a photo-induced radical polymerization initiator.

**13.** A holographic recording medium according to Claim 12, wherein the photo-induced radical polymerization initiator is a compound denoted by general formula (IV):

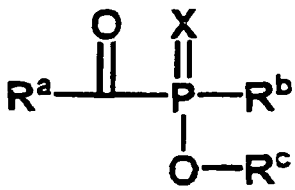

General Formula (IV)

wherein each of $R^a$, $R^b$ and $R^c$ independently denotes an alkyl group, aryl group or heterocyclic group, and X denotes an oxygen atom or sulfur atom.

**14.** A holographic recording medium according to any of Claims 8 to 13, wherein the recording layer is formed from an optical recording composition according to any of Claims 1 to 7.

**Patentansprüche**

**1.** Zusammensetzung für die optische Aufzeichnung, welche eine durch die allgemeine Formel (I) bezeichnete Verbindung umfasst:

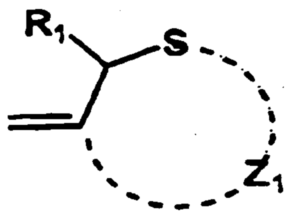

Allgemeine Formel (I)

worin $R_1$ ein Wasserstoffatom oder eine Alkylgruppe bezeichnet, und $Z_1$ eine Gruppe bezeichnet, die eine Ringstruktur mit den zu dieser Gruppe benachbarten Schwefel- und Kohlenstoffatomen und dem an das Schwefelatom gebundene Kohlenstoffatom bildet.

**2.** Zusammensetzung für die optische Aufzeichnung gemäß Anspruch 1, welche eine Zusammensetzung für die holografische Aufzeichnung ist.

**3.** Zusammensetzung für die optische Aufzeichnung gemäß Anspruch 1 oder 2, worin die durch die allgemeine Formel (I) bezeichnete Verbindung eine durch die allgemeine Formel (II) bezeichnete Verbindung ist:

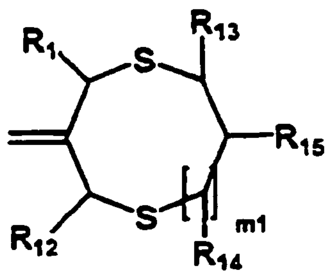

Allgemeine Formel (II)

worin $R_1$ wie in Anspruch 1 definiert ist, $R_{12}$ ein Wasserstoffatom oder eine Alkylgruppe bezeichnet; jedes von $R_{13}$, $R_{14}$ und $R_{15}$ unabhängig ein Wasserstoffatom, eine Alkylgruppe, Arylgruppe, heterocyclische Gruppe, Alkoxygruppe, Aryloxygruppe, Alkylthiogruppe, Arylthiogruppe, Alkoxycarbonylgruppe, Aryloxycarbonylgruppe, Acyloxygruppe, Acylaminogruppe, Sulfonylaminogruppe, Aminogruppe, Acylgruppe oder Halogengruppe bezeichnet; und m1 0 oder 1 ist.

**4.** Zusammensetzung für die optische Aufzeichnung gemäß Anspruch 1 oder 2, worin die durch die allgemeine Formel (I) bezeichnete Verbindung eine durch die allgemeine Formel (III) bezeichnete Verbindung ist:

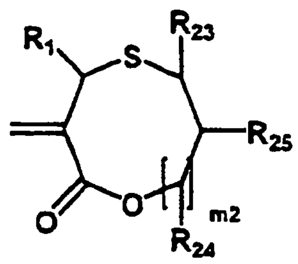

Allgemeine Formel (III)

worin $R_1$ wie in Anspruch 1 definiert ist; jedes von $R_{23}$, $R_{24}$ und $R_{25}$ unabhängig ein Wasserstoffatom, eine Alkylgruppe, Arylgruppe, heterocyclische Gruppe, Alkoxygruppe, Aryloxygruppe, Alkylthiogruppe, Arylthiogruppe, Alkoxycarbonylgruppe, Aryloxycarbonylgruppe, Acyloxygruppe, Acylaminogruppe, Sulfonylaminogruppe, Aminogruppe, Acylgruppe oder Halogengruppe bezeichnet; und m2 0 oder 1 ist.

**5.** Zusammensetzung für die optische Aufzeichnung gemäß jedem vorangehenden Anspruch, welche weiterhin ein polyfunktionelles Isocyanat und einen polyfunktionellen Alkohol umfasst.

**6.** Zusammensetzung für die optische Aufzeichnung gemäß jedem vorangehenden Anspruch, welche weiterhin einen fotoinduzierten radikalischen Polymerisationsinitiator umfasst.

**7.** Zusammensetzung für die optische Aufzeichnung gemäß Anspruch 6, worin der fotoinduzierte radikalische Polymerisationsinitiator eine durch die allgemeine Formel (IV) bezeichnete Verbindung ist:

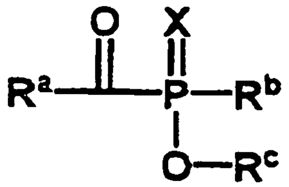

Allgemeine Formel (IV)

worin jedes von $R^a$, $R^b$ und $R^c$ unabhängig eine Alkylgruppe, Arylgruppe oder heterocyclische Gruppe bezeichnet, und X ein Sauerstoffatom oder Schwefelatom bezeichnet.

**8.** Holografisches Aufzeichnungsmedium, welches eine Aufzeichnungsschicht umfasst, die eine durch die allgemeine Formel (I) bezeichnete Verbindung umfasst:

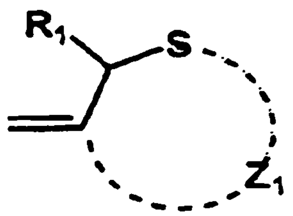

Allgemeine Formel (I)

worin $R_1$ ein Wasserstoffatom oder eine Alkylgruppe bezeichnet, und $Z_1$ eine Gruppe bezeichnet, die eine Ringstruktur mit den zu dieser Gruppe benachbarten Schwefel- und Kohlenstoffatomen und dem an das Schwefelatom gebundene Kohlenstoffatom bildet.

**9.** Holografisches Aufzeichnungsmedium gemäß Anspruch 8, worin die durch die allgemeine Formel (I) bezeichnete Verbindung eine durch die allgemeine Formel (II) bezeichnete Verbindung ist:

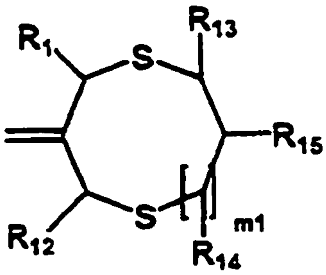

Allgemeine Formel (II)

worin $R_1$ wie in Anspruch 8 definiert ist, $R_{12}$ ein Wasserstoffatom oder eine Alkylgruppe bezeichnet; jedes von $R_{13}$, $R_{14}$ und $R_{15}$ unabhängig ein Wasserstoffatom, eine Alkylgruppe, Arylgruppe, heterocyclische Gruppe, Alkoxygruppe, Aryloxygruppe, Alkylthiogruppe, Arylthiogruppe, Alkoxycarbonylgruppe, Aryloxycarbonylgruppe, Acyloxygruppe, Acylaminogruppe, Sulfonylaminogruppe, Aminogruppe, Acylgruppe oder Halogengruppe bezeichnet; und m1 0 oder 1 ist.

**10.** Holografisches Aufzeichnungsmedium gemäß Anspruch 8, worin die durch die allgemeine Formel (I) bezeichnete Verbindung eine durch die allgemeine Formel (III) bezeichnete Verbindung ist:

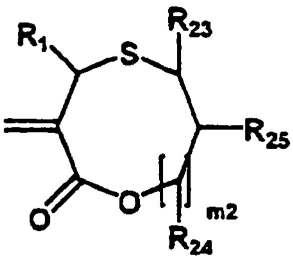

Allgemeine Formel (III)

worin $R_1$ wie in Anspruch 8 definiert ist; jedes von $R_{23}$, $R_{24}$ und $R_{25}$ unabhängig ein Wasserstoffatom, eine Alkylgruppe, Arylgruppe, heterocyclische Gruppe, Alkoxygruppe, Aryloxygruppe, Alkylthiogruppe, Arylthiogruppe, Alkoxycarbonylgruppe, Aryloxycarbonylgruppe, Acyloxygruppe, Acylaminogruppe, Sulfonylaminogruppe, Aminogruppe, Acylgruppe oder Halogengruppe bezeichnet; und m2 0 oder 1 ist.

**11.** Holografisches Aufzeichnungsmedium gemäß einem der Ansprüche 8 bis 10, worin die Aufzeichnungsschicht weiterhin ein polyfunktionelles Isocyanat und einen polyfunktionellen Alkohol umfasst.

**12.** Holografisches Aufzeichnungsmedium gemäß einem der Ansprüche 8 bis 11, worin die Aufzeichnungsschicht weiterhin einen fotoinduzierten radikalischen Polymerisationsinitiator umfasst.

**13.** Holografisches Aufzeichnungsmedium gemäß Anspruch 12, worin der fotoinduzierte radikalische Polymerisationsinitiator eine durch die allgemeine Formel (IV) bezeichnete Verbindung ist:

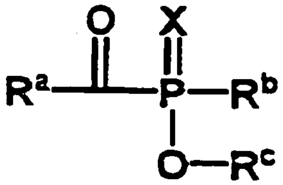

Allgemeine Formel (IV)

worin jedes von $R^a$, $R^b$ und $R^c$ unabhängig eine Alkylgruppe, Arylgruppe oder heterocyclische Gruppe bezeichnet,

und X ein Sauerstoffatom oder Schwefelatom bezeichnet.

**14.** Holografisches Aufzeichnungsmedium gemäß einem der Ansprüche 8 bis 13, worin die Aufzeichnungsschicht aus der Zusammensetzung für die optische Aufzeichnung gemäß einem der Ansprüche 1 bis 7 gebildet wird.

**Revendications**

**1.** Composition d'enregistrement optique comprenant un composé représenté par la formule générale (I) :

Formule Générale (I)

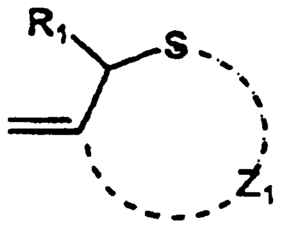

dans laquelle $R_1$ désigne un atome d'hydrogène ou un groupe alkyle, et $Z_1$ désigne un groupe formant une structure cyclique avec les atomes de soufre et de carbone adjacents au groupe et l'atome de carbone lié à l'atome de soufre.

**2.** Composition d'enregistrement optique selon la revendication 1, qui est une composition d'enregistrement holographique.

**3.** Composition d'enregistrement optique selon la revendication 1 ou la revendication 2, dans laquelle le composé représenté par la formule générale (I) est un composé représenté par la formule générale (II) :

Formule Générale (II)

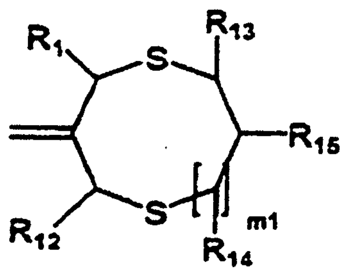

dans laquelle $R_1$ est tel que défini dans la revendication 1 ; $R_{12}$ désigne un atome d'hydrogène ou un groupe alkyle ; chacun de $R_{13}$, $R_{14}$ et $R_{15}$ désigne indépendamment un atome d'hydrogène, un groupe alkyle, un groupe aryle, un groupe hétérocyclique, un groupe alcoxy, un groupe aryloxy, un groupe alkylthio, un groupe arylthio, un groupe alcoxycarbonyle, un groupe aryloxycarbonyle, un groupe acyloxy, un groupe acylamino, un groupe sulfonylamino, un groupe amino, un groupe acyle ou un groupe halogéno ; et m1 vaut 0 ou 1.

**4.** Composition d'enregistrement optique selon la revendication 1 ou la revendication 2, dans laquelle le composé représenté par la formule générale (I) est un composé représenté par la formule générale (III) :

Formule Générale (III)

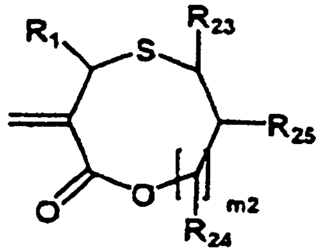

dans laquelle $R_1$ est tel que défini dans la revendication 1 ; chacun de $R_{23}$, $R_{24}$ et $R_{25}$ désigne indépendamment un atome d'hydrogène, un groupe alkyle, un groupe aryle, un groupe hétérocyclique, un groupe alcoxy, un groupe aryloxy, un groupe alkylthio, un groupe arylthio, un groupe alcoxycarbonyle, un groupe aryloxycarbonyle, un groupe acyloxy, un groupe acylamino, un groupe sulfonylamino, un groupe amino, un groupe acyle ou un groupe halogéno ; et m2 vaut 0 ou 1.

**5.** Composition d'enregistrement optique selon l'une quelconque des revendications précédentes, comprenant en outre un isocyanate polyfonctionnel et un alcool polyfonctionnel.

**6.** Composition d'enregistrement optique selon l'une quelconque des revendications précédentes, comprenant en outre un amorceur de polymérisation radicalaire photo-induit.

**7.** Composition d'enregistrement optique selon la revendication 6, dans laquelle l'amorceur de polymérisation radicalaire photo-induit est un composé représenté par la formule générale (IV) :

Formule Générale (IV)

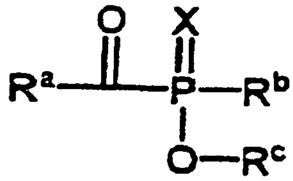

dans laquelle chacun de $R^a$, $R^b$ et $R^c$ désigne indépendamment un groupe alkyle, un groupe aryle ou un groupe hétérocyclique, et X désigne un atome d'oxygène ou un atome de soufre.

**8.** Support d'enregistrement holographique comprenant une couche d'enregistrement, la couche d'enregistrement comprenant un composé représenté par la formule générale (I) :

Formule Générale (I)

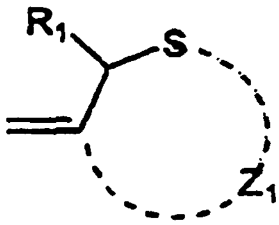

dans laquelle $R_1$ désigne un atome d'hydrogène ou un groupe alkyle, et $Z_1$ désigne un groupe formant une structure

cyclique avec les atomes de soufre et de carbone adjacents au groupe et l'atome de carbone lié à l'atome de soufre.

**9.** Support d'enregistrement holographique selon la revendication 8, dans lequel le composé représenté par la formule générale (I) est un composé représenté par la formule générale (II) :

Formule Générale (II)

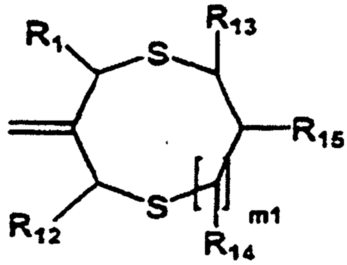

dans laquelle $R_1$ est tel que défini dans la revendication 8 ; $R_{12}$ désigne un atome d'hydrogène ou un groupe alkyle ; chacun de $R_{13}$, $R_{14}$ et $R_{15}$ désigne indépendamment un atome d'hydrogène, un groupe alkyle, un groupe aryle, un groupe hétérocyclique, un groupe alcoxy, un groupe aryloxy, un groupe alkylthio, un groupe arylthio, un groupe alcoxycarbonyle, un groupe aryloxycarbonyle, un groupe acyloxy, un groupe acylamino, un groupe sulfonylamino, un groupe amino, un groupe acyle ou un groupe halogéno ; et m1 vaut 0 ou 1.

**10.** Support d'enregistrement holographique selon la revendication 8, dans lequel le composé représenté par la formule générale (I) est un composé représenté par la formule générale (III) :

Formule Générale (III)

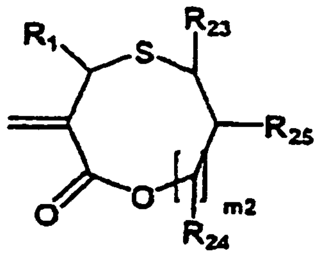

dans laquelle $R_1$ est tel que défini dans la revendication 8 ; chacun de $R_{23}$, $R_{24}$ et $R_{25}$ désigne indépendamment un atome d'hydrogène, un groupe alkyle, un groupe aryle, un groupe hétérocyclique, un groupe alcoxy, un groupe aryloxy, un groupe alkylthio, un groupe arylthio, un groupe alcoxycarbonyle, un groupe aryloxycarbonyle, un groupe acyloxy, un groupe acylamino, un groupe sulfonylamino, un groupe amino, un groupe acyle ou un groupe halogéno ; et m2 vaut 0 ou 1.

**11.** Support d'enregistrement holographique selon l'une quelconque des revendications 8 à 10, dans lequel la couche d'enregistrement comprend en outre un isocyanate polyfonctionnel et un alcool polyfonctionnel.

**12.** Support d'enregistrement holographique selon l'une quelconque des revendications 8 à 11, dans lequel la couche d'enregistrement comprend en outre un amorceur de polymérisation radicalaire photo-induit.

**13.** Support d'enregistrement holographique selon la revendication 12, dans lequel l'amorceur de polymérisation radicalaire photo-induit est un composé représenté par la formule générale (IV) :

Formule Générale (IV)

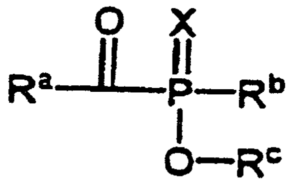

dans laquelle chacun de $R^a$, $R^b$ et $R^c$ désigne indépendamment un groupe alkyle, un groupe aryle ou un groupe hétérocyclique, et X désigne un atome d'oxygène ou un atome de soufre.

**14.** Support d'enregistrement holographique selon l'une quelconque des revendications 8 à 13, dans lequel la couche d'enregistrement est formée à partir d'une composition d'enregistrement optique selon l'une quelconque des revendications 1 à 7.

Fig. 1

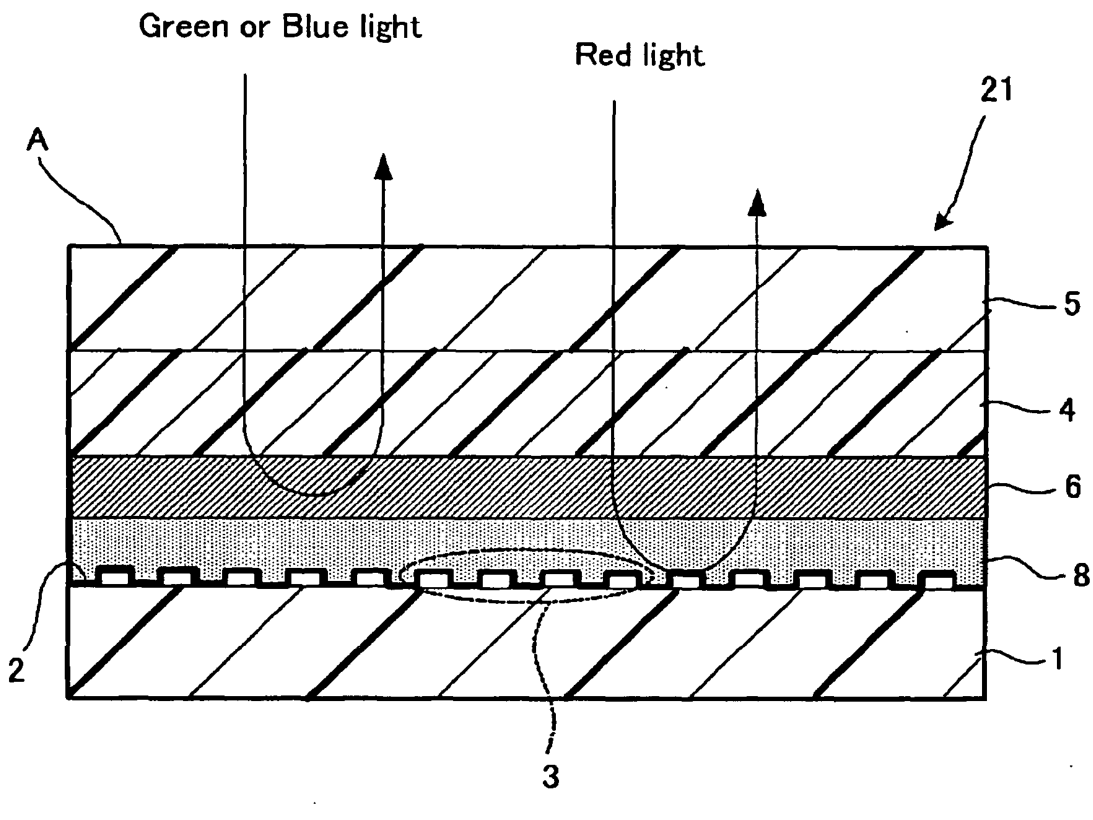

Fig. 2

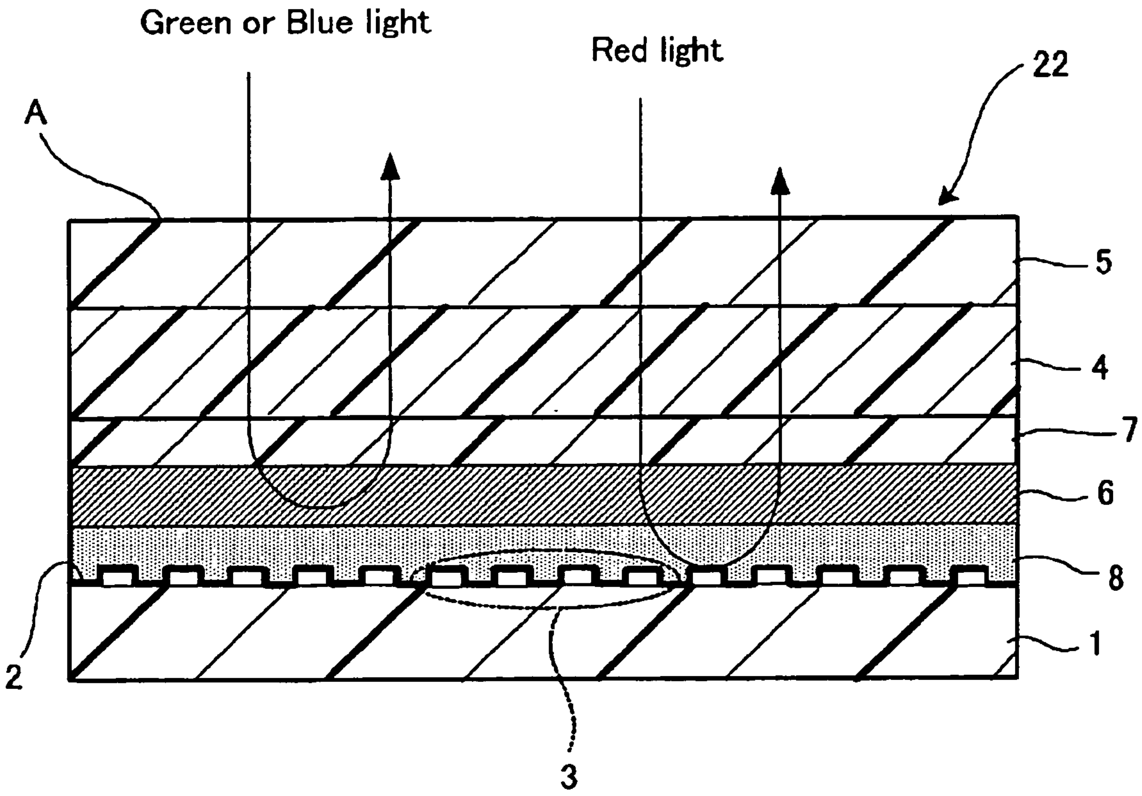

Fig. 3

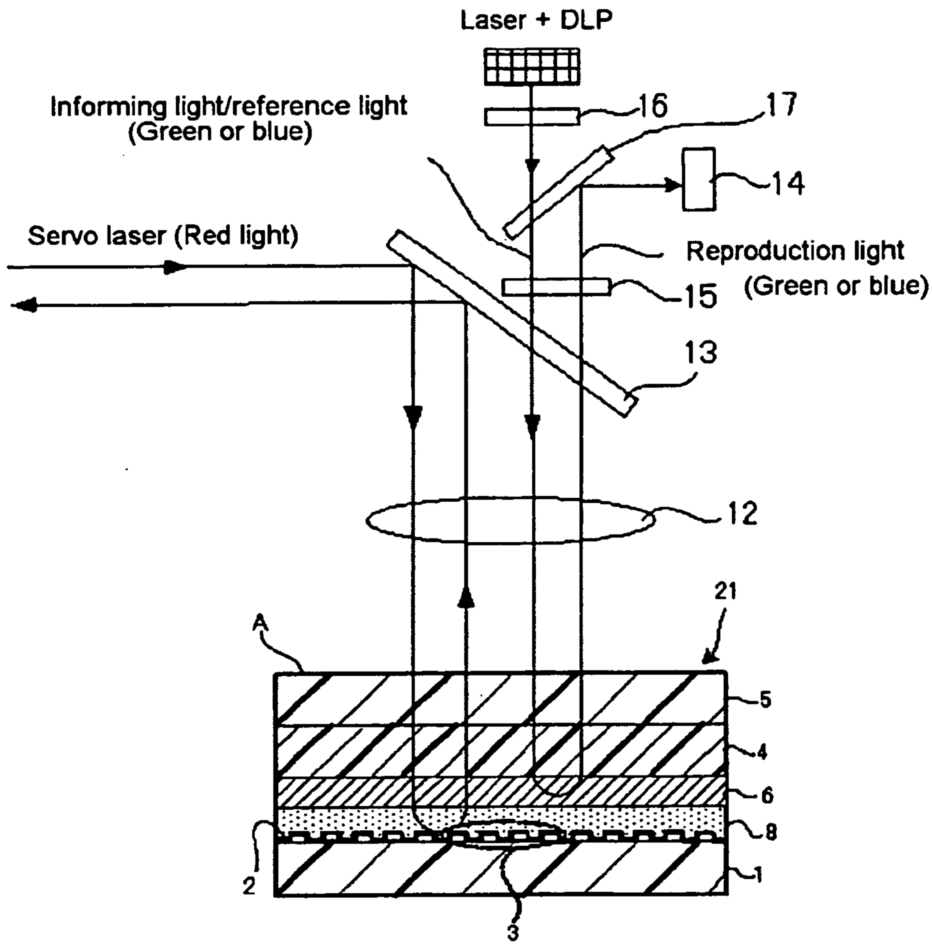
Laser + DLP
Informing light/reference light
(Green or blue)
16
17
14
Servo laser (Red light)
Reproduction light
(Green or blue)
15
13
12
21
A
5
4
6
8
2
1
3

Fig. 4

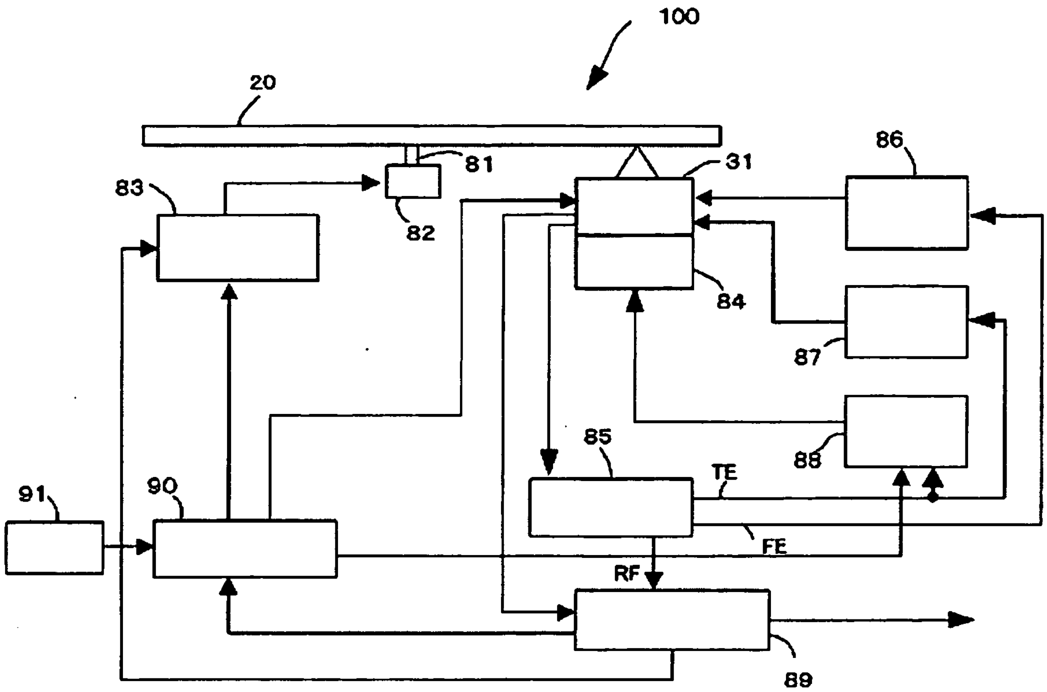
100
20
81
31
86
83
82
84
87
85
88
TE
91
90
FE
RF
89

Fig. 5

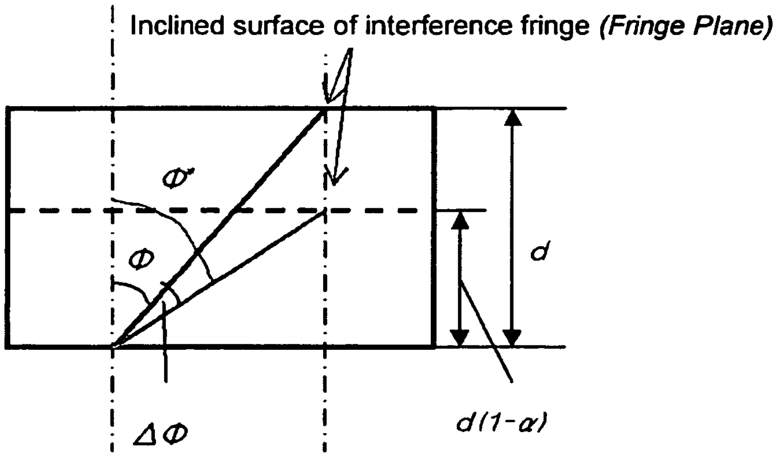
Inclined surface of interference fringe *(Fringe Plane)*
Φ'
Φ
d
ΔΦ
d(1-α)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11311936 A
- US 20020114027 A1
- JP 2005502918 PCT
- WO 03023519 A
- US 4959284 A
- WO 9414792 A
- WO 9619471 A
- DE 2830927 A1
- JP 58015603 A
- JP 58040302 A
- JP 59028328 A
- JP 60053300 A
- JP 61009621 A
- JP 62003842 A
- JP 59089303 A
- JP 60060104 A


### Non-patent literature cited in the description


- *Macromolecules,* 1994, vol. 27, 7935
- *Macromolecules,* 1996, vol. 29, 6983
- *Macromolecules,* 2000, vol. 33, 6722
- *J. Polym. Sci.: Part A Polym. Chem.,* 2001, vol. 39, 202
- **Jacobi, M. ; Henne, A.** *Polymers Paint Colour Journal,* 1985, vol. 175, 636
- *Research Disclosure,* December 1980, vol. 200
- Sensitizers. Kodansha, 1987, 160-163
- The Chemistry of Functional Dyes. CMC Press, 1981, 393-416
- *Coloring Materials,* 1987, vol. 60 (4), 212-224